# EUROPÄISCHE PATENTSCHRIFT

(11) **EP 2 084 439 B1**
(45) Veröffentlichungstag und Bekanntmachung des Hinweises auf die Patenterteilung: **01.04.2015**
(21) Anmeldenummer: 07819335.6
(22) Anmeldetag: 26.10.2007
(51) Int. Cl.: F16K 11/085, F16K 11/10

(54) **DREHSCHIEBER, INSBESONDERE FÜR EINEN MEHRERE ZWEIGE AUFWEISENDEN KÜHLMITTELKREISLAUF EINER BRENNKRAFTMASCHINE; ELEKTROMECHANISCHE BAUGRUPPE**
ROTARY SLIDE VALVE, IN PARTICULAR FOR A COOLANT CIRCUIT, WHICH HAS A PLURALITY OF BRANCHES, OF AN INTERNAL COMBUSTION ENGINE; ELECTROMECHANICAL ASSEMBLY
TIROIR ROTATIF, NOTAMMENT POUR UN CIRCUIT DE RÉFRIGÉRANT D'UN MOTEUR À COMBUSTION INTERNE PRÉSENTANT PLUSIEURS BRANCHES; SOUS-ENSEMBLE ÉLECTROMÉCANIQUE

(30) Priorität: 27.10.2006 DE 102006050826; 22.02.2007 DE 102007008553; 23.04.2007 DE 102007019064
(43) Veröffentlichungstag der Anmeldung: 05.08.2009
(73) Patentinhaber: AUDI AG, 85045 Ingolstadt (DE)
(72) Erfinder: STÖRMER, Markus, 85051 Ingolstadt (DE)
(86) Internationale Anmeldenummer: PCT/EP2007/009287
(87) Internationale Veröffentlichungsnummer: WO 2008/049624

(56) Entgegenhaltungen:
- CH-A- 328 844
- FR-A- 1 174 802
- FR-A- 2 803 834
- US-A- 4 655 252
- US-A- 5 167 254
- US-A1- 2004 140 445
- US-B1- 6 240 941
- US-B1- 6 308 739

## Beschreibung

Die Erfindung betrifft einen Drehschieber, insbesondere für einen mehrere Zweige aufweisenden Kühlmittelkreislauf einer Brennkraftmaschine, mit mehreren Querschnittsverstellgliedern.

Ferner betrifft die Erfindung einen Drehschieber mit mindestens einem drehbar gelagerten Querschnittsverstellglied und einem am Querschnittsverstellglied unter Zwischenschaltung mindestens einer Dichtung anliegenden Grundglied.

Ferner betrifft die Erfindung einen Drehschieber mit mindestens einem in einem Grundglied drehbar gelagerten Querschnittsverstellglied.

Schließlich betrifft die Erfindung eine elektromechanische Baugruppe.

Aus dem Stand der Technik (u.a. US 6 240 941 B1, US 2004/140445 A1, FR 1 174 802 A, US 4 655 252 A, US 6 308 739 B1, CH 328 844 A, US 5 167 254 A, FR 2 803 834 A) sind Drehschieber bekannt, die mit mehreren Querschnittsverstellgliedern unterschiedliche Durchströmungsquerschnitte für unterschiedliche Durchströmungen einstellen, wobei die Querschnittsverstellglieder entweder fest miteinander verbunden sind, sodass sie jeweils dieselbe Drehbewegung ausführen und dabei einen oder mehrere Durchströmungsquerschnitte einstellen, oder von jeweils einem Stellglied angetrieben und gesteuert werden. Drehschieber weisen zum Einstellen eines flüssigen oder gasförmigen Volumenstroms insbesondere in der Mantelfläche eines jeden Querschnittsverstellglieds mindestens eine Durchströmungsöffnung auf, die je nach Drehwinkelstellung des Querschnittsverstellglieds mit einem an einem Gehäuse des Drehschiebers ausgebildeten Zu- und/oder Ablauf für das Medium zusammenwirken kann. Je nach Drehwinkelstellung wird dabei ein Durchströmungsquerschnitt durch Überschneidung der jeweiligen Durchströmungsöffnung mit dem Zu- oder Ablauf eingestellt. Aufgrund der drehfesten Verbindung der Querschnittsverstellglieder können die unterschiedlichen Durchströmungsquerschnitte nicht unabhängig voneinander eingestellt werden. Die Verwendung mehrerer Stellglieder ist zwar einfach, jedoch bedarf diese Lösung eines größeren Bauraums und ist kostenaufwendiger.

Um ein ungewolltes Ausströmen eines Strömungsmediums zu verhindern, ist es bekannt einem Querschnittsverstellglied und dem Grundglied eine Dichtung zwischenzuschalten. Üblicherweise handelt es sich dabei um ein elastisch verformbares Dichtelement. Das Dichtelement, liegt dabei bei einer Drehbewegung des Querschnittsverstellglieds stets an dem Querschnittsverstellglied und dem Grundglied dicht an. Gleichmäßige Anpresskräfte der Dichtung gegen das Querschnittsverstellglied sind auf Grund der Formgebung des Drehschiebers jedoch nur schwer einzustellen. Darüber hinaus ergeben sich Probleme beim Überfahren eines Querschnittsverstellglied-Durchströmquerschnitts mit dem Dichtelement, da dieses beim Überfahren durch Verklemmen und durch Umstülpen beschädigt werden kann.

Weiterhin sind Drehschieber bekannt, bei denen mindestens ein Querschnittsverstellglied in einem Grundglied drehbar gelagert ist. In der Regel wird dabei ein Gleitlager von der Mantelfläche des Querschnittsverstellglieds und einer Innenfläche des Grundglieds gebildet. Dadurch wird das Querschnittsverstellglied zumindest radial in dem Grundglied gelagert beziehungsweise geführt. Durch die Gleitlagerung tritt zwar lokal Reibung auf, diese kann jedoch durch eine entsprechend günstige Werkstoffpaarung gering gehalten werden. Hierbei besteht jedoch der Nachteil, dass ein in dem Kühlmittelkreislauf vorhandener Festkörper beziehungsweise Schmutzpartikel sich zwischen dem Querschnittsverstellglied und dem Grundglied verklemmen kann. Die Folge wäre ein Versagen des Drehschiebers. Üblicherweise wird dies dadurch verhindert, dass der Spalt der Gleitlagerung derart klein gewählt wird, dass möglichst keine Festkörper zwischen das Querschnittsverstellglied und das Grundglied gelangen. Dies führt jedoch zu einem erhöhten Fertigungsaufwand sowie zu höheren Herstellungskosten. Alternativ dazu ist es bekannt, den Spalt derart groß zu wählen, dass der/die Festkörper durch den Drehschieber zwischen Querschnittsverstellglied und Grundglied hindurch gefördert wird/werden. Hierbei kann es jedoch dazu kommen, dass das Querschnittsverstellglied in dem Grundglied verkippt und dadurch verklemmt.

Es ist daher eine Aufgabe der Erfindung einen Drehschieber mit mehreren Querschnittsverstellgliedern zu schaffen, der eine individuelle Durchströmungsquerschnitt-Freigabe erlaubt und die oben genannten Nachteile umgeht.

Es ist eine weitere Aufgabe der Erfindung, einen Drehschieber mit mindestens einem Querschnittsverstellglied und einem Grundglied ist zu schaffen, der auf einfache Art und Weise die oben genannten Nachteile umgeht und eine dauerhafte und verlässliche Dichtung gewährleistet.

Eine weitere andere Aufgabe der Erfindung ist es, einen Drehschieber mit mindestens einem in einem Grundglied drehbar gelagerten Querschnittsverstellglied zu schaffen, dass ein Verklemmen des Querschnittsverstellglieds in dem Grundglied auf einfache und kostengünstige Art und Weise verhindert.

Die der Erfindung zugrundeliegende Aufgabe wird durch mindestens eine die Querschnittsverstellglieder miteinander koppelnde Einrichtung gelöst, die im gekoppelten Zustand einen Drehwinkelunterschied zwischen den Querschnittsverstellgliedern erzeugt. Der erfindungsgemäße Drehschieber weist also eine Einrichtung auf, die die Querschnittsverstellglieder miteinander koppelt, sodass beispielsweise die Bewegung eines Querschnittsverstellglieds auf das nächste Querschnittsverstellglied übertragen wird, wobei die Einrichtung derart ausgebildet ist, dass sie einen Drehwinkelunterschied zwischen den Querschnittsverstellgliedern erzeugt. Durch die Kopplung zweier Querschnittsverstellglieder mit der den Drehwinkelunterschied erzeugenden Einrichtung, wird beispielsweise erreicht, dass eine Umdrehung eines Querschnittsverstellglieds nicht 1:1 auf ein damit gekoppeltes Querschnittsverstellglied übertragen wird. Dies führt zu dem Vorteil, dass die Drehwinkel-Positionen der unterschiedlichen Querschnittsverstellglieder nicht direkt abhängig voneinander sind, sondern eine individuelle Einstellung der Querschnittsverstellglieder und somit der Durchströmungsquerschnitte zueinander möglich ist.

Nach einer Weiterbildung der Erfindung ist die Einrichtung ein Drehgetriebe.

Weiterhin ist vorgesehen, dass die Querschnittsverstellglieder unterschiedlichen Drehelementen zugeordnet sind, die jeweils über ein Drehgetriebe miteinander wirkverbunden sind. Das Drehgetriebe ermöglicht dabei vorteilhafterweise, dass sich die Drehelemente mit unterschiedlichen Drehzahlen bewegen, wobei nur eines angetrieben wird. Dadurch wird der Vorteil erhalten, dass die Drehpositionen der Querschnittsverstellglieder nicht direkt abhängig voneinander sind, sondern eine individuelle Einstellung erlauben.

Vorteilhafterweise ist das Drehgetriebe als Untersetzungsgetriebe ausgebildet. Das bedeutet, dass ein zuerst angetriebenes Drehelement mehr Umdrehungen pro Zeiteinheit durchläuft als ein damit über das Drehgetriebe, beziehungsweise das Untersetzungsgetriebe, wirkverbundenes zweites Drehelement. Bei dem Untersetzungsgetriebe muss das eine Drehelement im Vergleich zu einem Übersetzungsgetriebe zwar weiter und schneller gedreht werden, dafür aber ist ein geringeres Drehmoment notwendig, sodass der Kraftaufwand zum Antreiben verhältnismäßig gering ausfällt. Das Untersetzungsgetriebe kann dabei ein beliebiges Übersetzungsverhältnis (Untersetzung) aufweisen.

Vorteilhafterweise weist das Drehgetriebe eine Drehuntersetzung von 2:1 auf, sodass von zwei Drehelementen das eine, das antreibende, sich doppelt soweit dreht wie das andere. Wird zum Beispiel das eine um 360° gedreht, so dreht sich das andere um nur 180°, sodass das eine wieder in seine Ausgangsposition zurückgekehrt ist und das andere sich in einer neuen Position befindet. Die den jeweiligen Drehelementen zugeordneten Querschnittsverstellglieder geben in Abhängigkeit von der Drehposition des jeweiligen Drehelements jeweils mindestens einen Durchströmungsquerschnitt für gasförmige und/oder flüssige Stoffe frei. Vorteilhafterweise entspricht die Bewegung eines Querschnittsverstellglieds der Bewegung des jeweiligen Drehelements. Jedes Querschnittsverstellglied weist beispielsweise einen zylindrischen Körper mit einer Durchströmungsöffnung auf, welche in einer bestimmten Drehposition des Drehelementes beziehungsweise des Querschnittsverstellgliedes, mit einer entsprechenden Durchströmungsöffnung eines weiteren Bauteils, wie beispielsweise einer Leitung eines Kühlwassersystems, so korrespondiert, dass die Durchströmungsöffnungen direkt übereinander liegen, und ein maximaler Durchströmungsquerschnitt freigegeben ist. Durch Drehen des Drehelementes wird das Querschnittsverstellglied (ebenso) bewegt, sodass der Überschneidungsbereich der beiden Durchströmungsöffnungen und damit der Durchströmungsquerschnitt verkleinert wird. Bei einem Drehschieber mit zwei Querschnittsverstellgliedern, und zwei entsprechenden Drehelementen, die über ein Drehgetriebe beziehungsweise Untersetzungsgetriebe mit einem Übersetzungsverhältnis von 2:1 (=Untersetzung) wirkverbunden sind, wobei beide Querschnittsverstellglieder jeweils eine Durchströmungsöffnung, beispielsweise für zwei unterschiedliche Kühlwasserkreisläufe aufweisen, kann nun folgendes eingestellt werden: In einer Ausgangsposition befinden sich die Durchströmungsöffnungen jeweils in einer derartigen Stellung, dass jeweils der maximale Durchströmungsquerschnitt freigegeben ist. Durch Drehung des einen Drehelementes um 180°, wird der zugehörige Durchströmungsquerschnitt durch das entsprechende Querschnittverstellglied verschlossen, wohingegen das andere Drehelement nur um 90° aufgrund der Untersetzung gedreht wird, wobei je nach Ausgestaltung der Durchströmungsöffnungen, noch ein Durchströmungsquerschnitt gegeben ist. Um auch diesen vollständig zu verschließen, muss das eine Drehelement um 360° gedreht werden, sodass das zugehörige Querschnittsverstellglied wieder dieselbe Position einnimmt, die Einstellung des einen Drehelements also nicht verändert wird, und das Querschnittsverstellglied, welches dem anderen Drehelement zugehörig ist, um 180° gedreht wird, sodass der zugehörige Durchströmquerschnitt verschlossen wird. So kann individuell der jeweilige Durchströmungsquerschnitt freigegeben oder verschlossen beziehungsweise eingestellt werden. Natürlich, wie bereits gesagt, sind auch beliebig andere Übersetzungsverhältnisse, wie zum Beispiel 4:1 oder 6:1, denkbar.

Alternativ dazu ist das Drehgetriebe vorteilhafterweise als ein Übersetzungsgetriebe, beispielsweise mit einer Übersetzung von 1:2, 1:4 oder 1:6, ausgebildet. Prinzipiell ist hierbei jedes denkbare Übersetzungsverhältnis (Übersetzung) möglich.

Nach einer Weiterbildung der Erfindung sind zwei oder drei Drehelemente vorgesehen, sodass zwei oder drei unterschiedliche Durchströmungsquerschnitte freigegeben werden können, wodurch zwei oder drei Strömungen, beispielsweise unterschiedlicher Kühlkreisläufe, eingestellt werden können.

Vorteilhafterweise ist ein Querschnittsverstellglied eines ersten Drehelements ein Thermostat eines Kraftfahrzeugs, welches je nach Dreh-Stellung einen kleinen oder einen großen Kühlwasserkreislauf einer Verbrennungskraftmaschine frei gibt. Hierbei ist unter dem großen Kühlkreislauf ein Kühlwasserkreislauf zu verstehen, welcher durch den Kühler und die Verbrennungskraftmaschine führt, und unter dem kleinen Kühlkreislauf, ein Kühlwasserkreislauf, der nur durch die Verbrennungskraftmaschine führt. Während der Warmlaufphase der Verbrennungskraftmaschine kann vorteilhafterweise durch entsprechendes Einstellen der Querschnittsverstellglieder nur der kleine Kühlwasserkreislauf freigegeben werden, sodass sich das in der Verbrennungskraftmaschine befindliche Kühlwasser schneller erwärmt. Durch ein entsprechendes Einstellen des Querschnittsverstellglieds des ersten Drehelements ist es hierdurch möglich, den vom Kühlwasserkreislauf kommenden Volumenstrom, der durch den Kühler führt, zu dosieren, sodass eine besonders vorteilhafte Temperaturregelung durchführbar ist.

Nach einer Weiterbildung der Erfindung ist ein Querschnittsverstellglied eines zweiten Drehelementes als Heizungswärmetauscher-Regler ausgebildet. Durch Drehen des zweiten Drehelements kann der Heizungswärmetauscher-Regler so eingestellt werden, dass der Zulauf des Kühlwasserkreislaufes für den Heizungswärmetauscher freigegeben oder verschlossen wird. Dadurch kann der Kühlwasserkreislauf, der durch den Heizungswärmetauscher führt, ein- oder ausgeschaltet werden.

Nach einer Weiterbildung der Erfindung ist ein Querschnittsverstellglied eines dritten Drehelementes als Ölkühler-Regler ausgebildet. Mittels diesem kann der Kühlwasserkreislauf eines Ölkühlers des Kraftfahrzeuges beziehungsweise der Verbrennungskraftmaschine freigegeben oder verschlossen werden. Aufgrund der Untersetzungsgetriebe zwischen den drei Drehelementen, sind die relevanten Komponenten eines Kühlsystems des Kraftfahrzeugs, nämlich der Heizungswärmetauscher, der kleine beziehungsweise große Kühlwasserkreislauf des Verbrennungskraftmaschine und/oder der Ölkühler unabhängig voneinander regelbar, wobei das Thermostat stufenlos einstellbar ist und der Heizungswärmetauscher-Regler und der Ölkühler-Regler derart ausgebildet sind, dass sie vollständig freigebbar und/oder verschließbar sind, ohne dass sich an der Einstellung des Thermostats etwas verändert, oder mit anderen Worten, die Einstellung des Thermostats ist vorteilhafterweise veränderbar, während der Heizungswärmetauscher-Regler und der Ölkühler-Regler den entsprechenden Durchströmungsquerschnitt entweder vollständig freigeben und/oder verschließen. Wenn das Thermostat, also das Querschnittsverstellglied des ersten Drehelements, in einem Drehwinkelbereich von 90° einen entsprechenden Durchströmungsquerschnitt einstellt, muss das Querschnittsverstellglied des zweiten Drehelements, also der Heizungswärmetauscher-Regler, derart ausgebildet sein, dass er um einen Drehwinkel von 45° gedreht werden kann und über diesen Winkelbereich den Durchströmungsquerschnitt entweder vollständig freigibt oder verschließt. Dasselbe gilt entsprechend für die Ausbildung des Querschnittverstellglieds des dritten Drehelements beziehungsweise des Ölkühler-Reglers.

Die Querschnittsverstellglieder des Drehschiebers sind vorteilhafterweise strömungstechnisch miteinander verbunden, sodass die unterschiedlichen Kühlwasserkreisläufe vorteilhaft in einen gemeinsamen Kühlwasserkreislauf eingebunden werden können.

Vorteilhafterweise ist das erste Drehelement mittels eines Stellmotors antreibbar, wobei der Stellmotor aufgrund der Untersetzungsgetriebe klein und kompakt ausgeführt werden kann, was zum Bauraum- und Kosten-Vorteilen führt. Der eine Stellmotor reicht dabei aus, sämtliche Querschnittsverstellglieder individuell einzustellen. Der Stellmotor und der Drehschieber bilden dabei zusammen eine elektromechanische Baugruppe.

Eine Weiterbildung der Erfindung sieht vor, dass das Drehgetriebe als ein Planeten-, Stirn- oder Kegelradgetriebe ausgebildet ist. Vorteilhafterweise sind die Querschnittsverstellglieder derart ausgebildet, dass in einer Stellung sämtliche Durchströmungsquerschnitte verschlossen sind, sodass der Volumenstrom des Kühlwassers zum stehen kommt. Dadurch kann eine schaltbare beziehungsweise regelbare Wasserpumpe eingespart werden.

Vorteilhafterweise sind die Querschnittsverstellglieder einstückig mit den Drehelementen ausgebildet, dadurch lässt sich eine besonders einfache Ausführung des Drehschiebers realisieren, die einerseits platzsparend ist und andererseits Montage- und Herstellungskosten niedrig hält.

Nach einer Weiterbildung der Erfindung weist der Drehschieber mindestens ein antreibendes Querschnittsverstellglied und mindestens ein von dem antreibenden Querschnittsverstellglied über die als Getriebe ausgebildete Einrichtung antreibbares Querschnittsverstellglied auf, wobei das Getriebe mindestens ein Zahnrad aufweist, das mit Mitnahmeelementen jedes Querschnittsverstellglieds zusammenwirkt. Hierbei wird der Drehwinkelunterschied mittels des Getriebes erzeugt.

Mit Vorteil ist vorgesehen, dass die Mitnahmeelemente des antreibbaren Querschnittsverstellglieds über dessen gesamten Umfang und die Mitnahmeelemente des antreibenden Querschnittsverstellglieds nur über mindestens einen Umfangswinkelbereich dessen verteilt angeordnet sind. Es ist also vorgesehen, dass das antreibbare Querschnittsverstellglied über den gesamten Umfang verteilt die Mitnahmeelemente aufweist, sodass die Bewegung des Querschnittsverstellglieds stets mit der Bewegung des Zahnrads direkt gekoppelt ist, beziehungsweise dass sich das antreibbare Querschnittsverstellglied nur in Abhängigkeit von einer Bewegung beziehungsweise Drehung des Zahnrades verstellen kann. Das antreibende Querschnittsverstellglied hingegen weist nur über mindestens einen Umfangswinkelbereich verteilt angeordnete Mitnahmeelemente auf. Mit anderen Worten weist das antreibende Querschnittsverstellglied mindestens einen mitnahmeelementfreien Umfangswinkelbereich auf. Dies wiederum bedeutet, dass das antreibende Querschnittsverstellglied Drehwinkelstellungsbereiche aufweist, in denen es nicht mit dem Zahnrad zusammenwirkt. Hierdurch kann das antreibende Querschnittsverstellglied in dem beziehungsweise über den mitnahmeelementfreien Umfangswinkelbereich verdreht werden, ohne dass sich die Drehbewegung auf das Zahnrad oder das antreibbare Querschnittsverstellglied überträgt. Um den mitnahmeelementfreien Umfangswinkelbereich des antreibenden Querschnittsverstellglieds kann dieses also losgelöst von dem antreibbaren Querschnittsverstellglied bewegt, eingestellt beziehungsweise verdreht werden, wobei der freie Verdrehwinkel konstruktiv durch die Mitnahmeelemente, insbesondere durch die Anzahl der Mitnahmeelemente bestimmt wird. Zum Verstellen des antreibbaren Querschnittsverstellglieds wird das antreibende Querschnittsverstellglied derart verdreht, dass seine Mitnahmeelemente mit dem Zahnrad zusammenwirken, sodass das Zahnrad und das antreibbare Querschnittsverstellglied verdreht werden können, wobei sich das antreibbare Querschnittsverstellglied pro Umdrehung des antreibenden Querschnittsverstellglieds um den die Mitnahmeelemente aufweisenden Umfangswinkelbereich des antreibenden Querschnittsverstellglieds entsprechend verstellt. Zweckmäßigerweise weisen die Mitnahmeelemente des antreibenden und des antreibbaren Querschnittsverstellglieds in Umfangsrichtung gesehen jeweils denselben Abstand zueinander auf.

Vorteilhafterweise sind die Mitnahmeelemente an den sich gegenüberliegenden Enden der Querschnittsverstellglieder angeordnet. Die Querschnittsverstellglieder weisen zweckmäßigerweise einen kreiszylinderförmigen Querschnitt auf und sind zumindest bereichsweise axial von dem Medium durchströmbar. Die Querschnittsverstellglieder sind dabei koaxial zueinander ausgerichtet, wobei sich zwei Enden der Querschnittsverstellglieder gegenüberliegen. Durch die Anordnungen der Mitnahmeelemente an eben diesen Enden wird das Getriebe auf einem besonders kleinen Raum ermöglicht, da das Zahnrad auf einfache Art und Weise mit beiden Querschnittsverstellgliedern zusammenwirken kann.

In einer Weiterbildung der Erfindung sind die Mitnahmeelemente der Querschnittsverstellglieder als Radialmitnahmevorsprünge an einer Mantelfläche des jeweiligen Querschnittsverstellglieds ausgebildet. In einer bevorzugten Ausführungsform der Erfindung sind die Mitnahmeelemente als Axialmitnahmevorsprünge, insbesondere an einer Stirnfläche des jeweiligen Querschnittsverstellglieds, ausgebildet. Wobei die Mitnahmeelemente derart ausgebildet sein können, dass sie zwischen den Querschnittsverstellgliedern angeordnet sind, oder inner- oder außerhalb einer Mantelfläche der Querschnittsverstellglieder. Sind die Mitnahmeelemente, ob als Axial- und/oder Radialmitnahmevorsprünge, innerhalb oder außerhalb einer Mantelfläche der Querschnittsverstellglieder angeordnet, so weisen die Querschnittsverstellglieder vorzugsweise jeweils eine ebene Stirnfläche auf, die an einer ebenen Stirnfläche des benachbarten Querschnittsverstellglieds anliegt und so eine Dichtung bildet. Zusätzlich kann hierbei auch ein weiteres Dichtelement, wie zum Beispiel ein O-Ring, zwischen den Querschnittsverstellgliedern angeordnet sein. Zweckmäßigerweise sind in diesem Fall die Mitnahmeelemente der Querschnittsverstellglieder und die ebenen Stirnflächen auf unterschiedlichen Radien angeordnet.

Vorteilhafterweise verläuft die Drehachse des Zahnrades parallel zu den Drehachsen der Querschnittsverstellglieder. Dadurch wird zum Einen eine schmale Bauform gewährleistet und zum Anderen wird die Drehbewegung des antreibenden Querschnittsverstellglieds direkt, also ohne Drehrichtungsumkehr, übertragen, wodurch geringere Relativbewegungen zwischen den Querschnittsverstellgliedern auftreten, was insbesondere bei einer wie oben vorgesehenen Dichtung vorteilhaft ist.

Nach einer Weiterbildung der Erfindung weist das Getriebe eine Verdrehsicherung auf. Da das antreibende Querschnittsverstellglied beziehungsweise die Mitnahmeelemente des antreibenden Querschnittsverstellglieds im mitnahmeelementfreien Umfangswinkelbereich nicht mit dem Zahnrad in Verbindung stehen und somit das antreibbare Querschnittsverstellglied losgelöst von dem antreibenden Querschnittsverstellglied frei verdrehbar ist, könnte es geschehen, dass sich das antreibbare Querschnittsverstellglied ungewollt verstellt. Die Verdrehsicherung des Getriebes verhindert ein derartiges Verstellen beziehungsweise Verdrehen des antreibbaren Querschnittsverstellglieds wenn sich die Zähne des Zahnrades im mitnahmeelementfreien Umfangswinkelbereich des antreibenden Querschnittsverstellglieds befinden.

Besonders bevorzugt wird die Verdrehsicherung von dem Zahnrad und dem antreibenden Querschnittsverstellglied gebildet, sodass keine zusätzlichen Elemente notwendig sind. Die Verdrehsicherung wirkt hierbei direkt auf das Zahnrad und über das Zahnrad auf das antreibbare Querschnittsverstellglied. Hierdurch wird eine besonders einfache und kostengünstige Verdrehsicherung gewährleistet.

Das antreibende Querschnittsverstellglied weist vorteilhafterweise an mindestens einem mitnahmeelementfreien Umfangswinkelbereich einen ringsegmentförmigen Sicherungsaxialvorsprung auf, der zweckmäßigerweise auf demselben Radius wie die Mitnahmeelemente liegt. Der ringsegmentförmige Sicherungsaxialvorsprung schließt sich bevorzugt direkt an das erste und/oder das letzte Mitnahmeelement, beziehungsweise an das/die äußerste/n Mitnahmeelement/e eines Mitnahmeelemente aufweisenden Umfangswinkelbereichs des Querschnittverstellglieds an.

Mit Vorteil ist weiterhin vorgesehen, dass die Mitnahmeaxialvorsprünge axial weiter hervorstehen als der Sicherungsaxialvorsprung. Das bedeutet, dass im mitnahmeelementfreien Umfangswinkelbereich der Sicherungsaxialvorsprung axial zurückgesetzt zu den Mitnahmeaxialvorsprüngen liegt. Wobei der Sicherungsaxialvorsprung nur in dem mitnahmeelementfreien Umfangswinkelbereich vorgesehen ist, so dass in dem die Mitnahmeelemente aufweisenden Umfangswinkelbereich zwischen den Mitnahmeelementen beziehungsweise Mitnahmeaxialvorsprüngen entsprechend tiefe Axialaussparungen gebildet sind.

Bevorzugt sind einige der Zähne des Zahnrades auf der mit dem antreibenden Querschnittsverstellglied zusammenwirkenden Seite des Zahnrades axial verkürzt ausgebildet. Auf der dem antreibbaren Querschnittsverstellglied zugewandten Seite schließen sämtliche Zähne axial bündig mit einer gedachten, senkrecht zur Drehachse ausgerichteten Ebene ab, sodass zwischen den Mitnahmeaxialvorsprüngen des antreibbaren Querschnittsverstellglieds und dem Zahnrad stets im Wesentlichen derselbe Berührungskontakt vorliegt.

Auf der mit dem antreibenden Querschnittsverstellglied zusammenwirkenden Seite wirken vorteilhafterweise die breiteren Zähne in bestimmten Drehstellungen mit dem Sicherungsaxialvorsprung zusammen. Insbesondere wirken die breiteren Zähne dann mit dem Sicherungsaxialvorsprung zusammen, wenn sich das Zahnrad im mitnahmeelementfreien Umfangswinkelbereich des antreibenden Querschnittsverstellglieds befindet. Um die Verdrehsicherung zu bewirken liegen die Flanken von zwei der breiteren Zähne auf der äußeren Mantelfläche des Sicherungsaxialvorsprungs auf. In einer anderen Verdrehstellung der Querschnittsverstellglieder kann das Zahnrad auch mit einem der breiteren Zähne auf einer Mantelfläche des äußersten Mitnahmeaxialvorsprungs und mit einem weiteren breiteren Zahn auf der Mantelfläche des Sicherungsaxialvorsprungs aufliegen.

Die schmaleren Zähne, hingegen, sind vorteilhafterweise axial beabstandet zu dem Sicherungsaxialvorsprung ausgebildet beziehungsweise angeordnet. Dadurch können sich die schmaleren Zähne des Zahnrads beim Verdrehen in eine Verdrehsicherungsstellung an dem Sicherungsaxialvorsprung vorbeibewegen beziehungsweise an diesem vorbeidrehen. In einer Verdrehsicherungsstellung liegen beispielsweise zwei breitere Zähne auf der äußeren Mantelfläche des Sicherungsaxialvorsprungs auf, wobei einer oder mehrere dazwischen liegende schmale Zähne des Zahnrades an dem Sicherungsaxialvorsprung vorbeiragen.

Nach einer Weiterbildung der Erfindung ist das Getriebe außerhalb des Strömungsquerschnittes der Querschnittsverstellglieder angeordnet. Dadurch wird eine dauerhafte Funktion gewährleistet, da nunmehr von dem Medium mitgeführte Störelemente, wie zum Beispiel Schmutzpartikel, nicht in das Getriebe gelangen und sich dort festsetzen können, was zu einem Ausfall beziehungsweise einem Klemmen des Getriebes und somit des gesamten Drehschiebers führen würde. Hierbei ist insbesondere die oben beschriebene Ausführung des Drehschiebers vorteilhaft, bei der die Querschnittsverstellglieder auf einem zu den Mitnahmeelementen kleineren Radius angeordnete ebene, eine Dichtung bildenden Stirnflächen aufweisen, um ein Eindringen des Mediums in das Getriebe beziehungsweise ein Umströmen des Getriebes durch das Medium zu verhindern. Darüber hinaus kann das Getriebe durch die vorteilhafte Anordnung auf einfache Art und Weise (ein-) gekapselt werden.

Zweckmäßigerweise weist das Getriebe eine Übersetzung von 1:1 auf, wobei der Drehewinkelunterschied zwischen den Querschnittsverstellgliedern allein durch die Größe des den die Mitnahmeelemente aufweisenden Umfangswinkelbereichs des antreibenden Querschnittsverstellglieds bestimmt wird. Hierdurch wird eine besonders einfache Lösung geboten. Alternativ kann das Getriebe auch als Übersetzungs- oder Untersetzungsgetriebe ausgebildet sein, sodass eine Drehbewegung des antreibenden Querschnittsverstellglieds in einem bestimmten Übersetzungsverhältnis i (i ≠ 1) übertragen wird. Hierdurch können noch weitere, unterschiedliche Einstellungen des Drehschiebers erreicht werden.

Die weitere der Erfindung zugrundeliegende Aufgabe wird dadurch gelöst, dass die Dichtung eine Dichtwand und eine benachbart dazu angeordnete Dichtlippe aufweist, wobei die Dichtwand steifer als die Dichtlippe ausgebildet ist. Es ist also vorgesehen, dass die Dichtung eine Dichtlippe und eine steifer als die Dichtlippe ausgebildete Dichtwand aufweist. Bevorzugt ist die Dichtung derartig an dem Grundglied befestigt, dass sie einen Durchströmungsquerschnitt beziehungsweise eine Durchströmungsöffnung des Grundglieds vollumfänglich umrandet/umschließt. Wobei die Dichtwand vorteilhafterweise ebenfalls an dem Querschnittsverstellglied anliegt und eine Dichtwirkung erzielt. Hierdurch ist also eine Doppeldichtung realisiert, wobei die steifer ausgebildete Dichtwand beispielsweise als Grobdichtung und die weniger steif ausgebildete Dichtlippe als Feindichtung wirkt. Die Dichtwand schützt dabei die Dichtlippe beispielsweise vor Verschmutzungen. Beim Überfahren eines Querschnittsverstellglied-Durchströmungsquerschnitts wird die Dichtlippe, wie aus dem Stand der Technik bekannt, elastisch verformt, jedoch wird die Verformung beziehungsweise Auslenkung der Dichtlippe durch die Dichtwand eingeschränkt, sodass die Dichtlippe nicht zu hohen Belastungen ausgesetzt werden, verklemmen und/oder umstülpen kann.

Vorteilhafterweise besteht die Dichtwand gegenüber der Dichtlippe aus einem steiferen beziehungsweise weniger elastischen Material. Es ist also vorgesehen, dass der Dichtwand und der Dichtlippe aufgrund von Materialeigenschaften unterschiedliche Funktionen, wie zum Beispiel Grobdichtung/Feindichtung, vorgegeben werden. Alternativ oder zusätzlich dazu wird die Steifigkeit der Dichtwand und/oder der Dichtlippe vorteilhaft durch ihre Formgebung beeinflusst. Die Dichtwand kann beispielsweise Versteifungsrippen aufweisen, die ihre Steifigkeit erhöhen. Ebenso ist es denkbar, die Steifigkeit durch die Querschnittsform der Dichtlippe und/oder der Dichtwand einzustellen.

Nach einer Weiterbildung der Erfindung ist die Dichtlippe beidseitig von Dichtwänden benachbart. Hierdurch wird die Verformung der Dichtlippe zu beiden Seiten eingeschränkt, um einen besonders vorteilhaften Schutz gegen ein Verklemmen oder Umstülpen der Dichtlippe zu erhalten. Bei einer Verformung der Dichtlippe in die eine oder andere Richtung wird diese vorteilhafterweise gegen die eine oder andere Dichtwand gedrückt, die dadurch die Dichtlippe stützt und eine Überbelastung beziehungsweise eine Überdehnung sowie ein Verklemmen und/oder Umstülpen verhindert.

Bevorzugt sind die Dichtwände von den Schenkeln eines U-förmigen Dichtungsprofils gebildet, wobei sich die Dichtlippe besonders bevorzugt im Inneren des U-förmigen Dichtungsprofils befindet. Das die Dichtwände bildende U-förmige Dichtungsprofil, das bevorzugt einstückig ausgebildet ist, ist einfach handhabbar und leicht zu montieren. Die Schenkel werden dabei durch einen Steg des U-förmigen Dichtungsprofils miteinander verbunden. Die Dichtlippe befindet sich, wie bereits gesagt, bevorzugt im Inneren des U-förmigen Dichtungsprofils, sodass sie von den zwei Dichtwänden, also beidseitig, umgeben ist. Vorteilhafterweise ist die Dichtlippe am Steg des U-förmigen Dichtungsprofils angeordnet und daran befestigt. Die Befestigung der Dichtlippe auf dem Steg kann beispielsweise durch Vulkanisieren, Kleben oder andere dem Fachmann bekannte Verbindungstechniken realisiert werden.

Ist nur eine Dichtwand vorgesehen, so ist diese bevorzugt Bestandteil eines L-förmigen Dichtungsprofils, wobei ein Schenkel die Dichtwand und ein Schenkel einen Steg bildet, auf dem die Dichtlippe, wie oben zu dem U-förmigen Dichtungsprofil beschrieben, aufgebracht ist. Durch die L-förmige oder U-förmige Ausbildung des Dichtungsprofils ist eine stabile und verlässliche Führung der Dichtlippe gewährleistet. Nach einer Weiterbildung der Erfindung ist das Dichtungsprofil (U-förmig oder L-förmig) von einem Federelement beaufschlagt, das zwischen dem Dichtungsprofil und dem Grundglied des Drehschiebers angeordnet ist. Dadurch wird die Dichtung gegen das Querschnittsverstellglied gedrückt und aufgrund des Dichtungsprofils wird eine gleichmäßige Anpresskraft gewährleistet beziehungsweise realisiert.

Im kraftfreien, also unbelasteten Zustand weist die Dichtlippe bevorzugt zu der Dichtwand oder zu den Dichtwänden einen seitlichen Abstand beziehungsweise seitliche Abstände auf. Dadurch ist der Dichtlippe zu der einen Dichtwand beziehungsweise zwischen den beiden Dichtwänden ein bestimmter Bewegungsspielraum vorgegeben beziehungsweise ermöglicht, in dem sich die Dichtlippe verformen kann. Ist der seitliche Abstand entsprechend groß gewählt, wird ein "Herausfallen" der Dichtlippe aus dem Dichtungsprofil verhindert.

Nach einer weiteren vorteilhaften Ausgestaltung der Erfindung bestehen die Dichtwand und/oder die Dichtwände aus Teflon. Bevorzugt besteht die Dichtlippe aus einem Elastomerwerkstoff.

Mindestens eine Dichtung wie sie obenstehend beschrieben wurde, ist vorteilhafterweise ebenfalls bei dem oben beschriebenen Drehschieber mit mehreren Querschnittsverstellgliedern vorgesehen. Zweckmäßigerweise ist dabei jedem Querschnittsverstellglied und jedem mit dem entsprechenden Querschnittsverstellglied zusammenwirkenden Grundglied mindestens eine, nach einer der oben beschriebenen Ausführungsformen ausgebildete, Dichtung zwischengeschaltet.

Der erfindungsgemäße Drehschieber mit dem mindestens einem in dem Grundglied drehbar gelagerten Querschnittsverstellglied ist dadurch gekennzeichnet, dass das Querschnittsverstellglied zumindest radial beabstandet zu dem Grundglied angeordnet ist. Durch das Anordnen des Querschnittsverstellglieds mit einem festen radialen Abstand zu dem Grundglied wird zum Einen ein Verkippen des Querschnittsverstellglieds verhindert und zum Anderen kann der Spalt zwischen Querschnittsverstellglied und Grundglied, der dem Abstand entspricht, entsprechend gewählt werden. Neben der beschriebenen radialen Beabstandung des Querschnittsverstellglieds zu dem Grundglied kann auch eine axiale Beabstandung beispielsweise zwischen Stirnflächen des Querschnittsverstellglieds und des Grundglieds vorgesehen sein.

Vorteilhafterweise ist der Abstand derart groß gewählt, dass ein im Kühlmittelkreislauf angenommener, vorhandener Festkörper bestimmbarer Größe nicht zwischen dem Querschnittsverstellglied und dem Grundglied verklemmt. Hierbei wird also der Abstand zwischen Querschnittsverstellglied und Grundglied derart gewählt, dass insbesondere der größte angenommene in dem Kühlmittelkreislauf befindliche Festkörper sich nicht zwischen dem Querschnittsverstellglied und dem Grundglied verklemmen und/oder ansammeln kann. Durch den vorteilhaft gewählten Abstand wird der Festkörper vielmehr zwischen dem Querschnittsverstellglied und dem Grundglied hindurch gefördert.

Nach einer Weiterbildung der Erfindung weist das Querschnittsverstellglied mindestens einen Wellenabschnitt auf, mittels dessen das Querschnittsverstellglied an dem Grundglied drehbar gelagert ist. Besonders bevorzugt weist das Querschnittsverstellglied zwei Wellenabschnitte auf, die an dem Grundglied drehbar gelagert sind und bevorzugt eine bestimmte Lagerung des Querschnittsverstellglieds in dem Grundglied erzeugen. Der Wellenabschnitt oder die Wellenabschnitte bilden zusammen mit einem entsprechenden Abschnitt des Grundglieds ein Lager des Drehschiebers. Vorteilhafterweise ist das Lager ein Gleitlager. Darüber hinaus ist es auch denkbar, zwischen zumindest einem Wellenabschnitt und dem Grundglied mindestens ein Wälzlager zwischenzuschalten.

Zweckmäßigerweise ist der Wellenabschnitt an einer Stirnseite des Querschnittsverstellglieds angeordnet. Bevorzugt sind beide Wellenabschnitte an jeweils einer Stirnseite des Querschnittsverstellglieds angeordnet, sodass das Querschnittsverstellglied zwischen den Wellenabschnitten angeordnet und beidseitig in dem Grundglied gelagert ist. Die beidseitige Lagerung verhindert dauerhaft ein Verkippen des Querschnittsverstellglieds. Vorteilhafterweise weist der Wellenabschnitt einen kleineren Durchmesser auf als das Querschnittsverstellglied beziehungsweise die Mantelfläche des Querschnittsverstellglieds.

Nach einer Weiterbildung der Erfindung weist der Drehschieber mindestens eine zwischen dem Querschnittsverstellglied und dem Grundglied geschaltete Dichtung auf, insbesondere eine Dichtung, wie sie obenstehend beschrieben wurde. Die beschriebene Lagerung des Querschnittsverstellglieds in dem Grundglied ist vorteilhafterweise bei dem oben beschriebenen Drehschieber mit mehreren Querschnittsverstellgliedern, die miteinander gekoppelt sind, vorgesehen, sodass jedes der Querschnittsverstellglieder vor einem Verklemmen geschützt ist.

Die elektromechanische Baugruppe ist gekennzeichnet durch mindestens einen den Drehschieber beziehungsweise ein Querschnittsverstellglied antreibenden elektrischen Antrieb. Mittels des Antriebs können das Querschnittsverstellglied beziehungsweise die Querschnittsverstellglieder individuell eingestellt werden. Die elektromechanische Baugruppe aus Drehschieber und Antrieb bildet dabei eine kompakte Einheit die auf einfache Art und Weise in den Kühlmittelkreislauf einer Brennkraftmaschine, insbesondere eines Kraftfahrzeugs, integriert werden kann. Die elektromechanische Baugruppe kann zur Einstellung beziehungsweise Regulierung des gesamten Thermomanagements der Brennkraftmaschine beziehungsweise des Kraftfahrzeugs eingesetzt werden.

Im Folgenden soll die Erfindung anhand mehrerer Figuren näher erläutert werden. Dabei zeigen
- Figur 1: einen erfindungsgemäßen Drei-Stufen-Drehschieber in einer schematischen Darstellung,
- Figuren 2 a) bis 2 d): das Funktionsprinzip des erfindungsgemäßen Drehschiebers in einer schematischen Darstellung,
- Figur 3: ein Ausführungsbeispiel eines erfindungsgemäßen Drei-Stufen-Drehschiebers,
- Figur 4: den Drei-Stufen-Drehschieber mit Peripherie,
- Figur 5: ein weiteres Ausführungsbeispiel eines erfindungsgemäßen Drehschiebers in einer perspektivischen Darstellung,
- Figur 6: ein antreibendes Querschnittsverstellglied des Drehschiebers,
- Figur 7: ein antreibbares Querschnittsverstellglied des Drehschiebers,
- Figur 8: ein Ausführungsbeispiel für einen Drehschieber mit einer Dichtung,
- Figur 9: ein U-förmiges Dichtungsprofil der Dichtung,
- Figur 10: das U-förmige Dichtungsprofil mit einer Dichtlippe,
- Figur 11: eine vorteilhafte Dichtung im Querschnitt,
- Figur 12: ein weiteres Ausführungsbeispiel eines erfindungsgemäßen Drehschiebers in einer schematischen Darstellung und
- Figur 13: den Drehschieber aus der Figur 12 in einer Draufsicht.

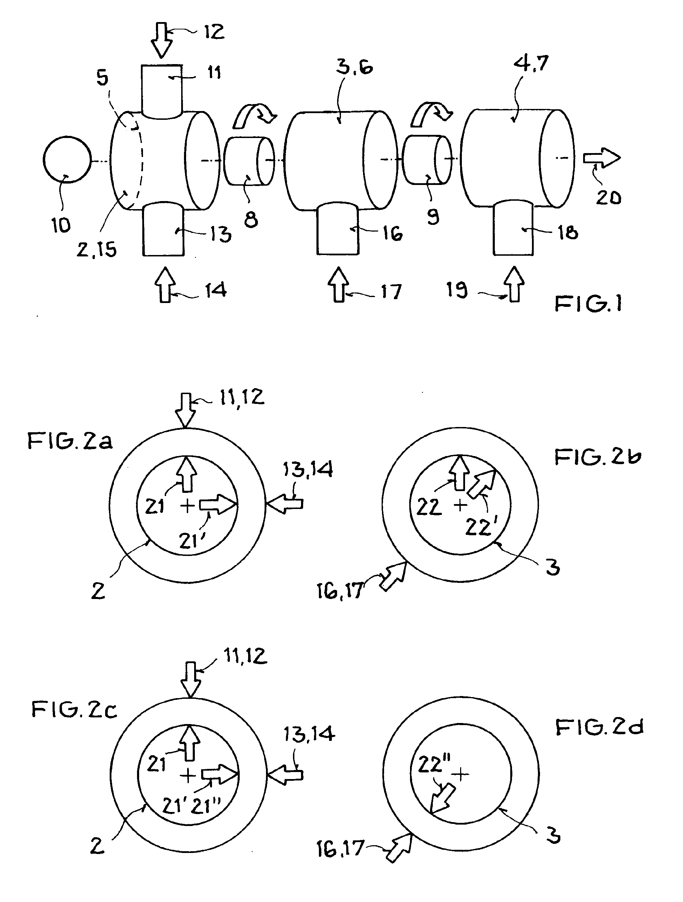

Die Figur 1 zeigt in einer schematischen Darstellung ein Ausführungsbeispiel eines erfindungsgemäßen Drei-Stufen-Drehschiebers 1 mit drei Querschnittsverstellgliedern 2, 3 und 4, die jeweils mit einem der Drehelemente 5, 6 und 7 einstückig ausgebildet sind. Je zwei Querschnittsverstellglieder 2, 3 und 3, 4 sind dabei über Drehgetriebe in Form von Untersetzungsgetrieben 8 und 9 miteinander wirkverbunden. Das erste Querschnittsverstellglied 2 wird von einem Stellmotor 10 angetrieben. Das Querschnittsverstellglied 2 wirkt mit einem Zulauf 11 eines großen Kühlwasserkreislaufs 12 und mit einem Zulauf 13 eines kleinen Kühlwasserkreislaufes 14 zusammen, wobei das Querschnittsverstellglied 2 eine hier nicht dargestellte Öffnung aufweist, welche je nach Drehstellung des Querschnittsverstellglieds 2 beziehungsweise des Drehelements 5 mit einem der Zuläufe 11 oder 13 korrespondiert, sodass ein Durchströmungsquerschnitt für einen der beiden Kühlwasserkreisläufe 12, 14 freigegeben oder verschlossen beziehungsweise eingestellt werden kann. Der hier dargestellte Drei-Stufen-Drehschieber 1 stellt eine Regeleinheit für ein Thermomanagement eines Kraftfahrzeugs dar. Der kleine Kühlwasserkreislauf 14 ist dabei der Kühlwasserkreislauf, welcher durch eine Verbrennungskraftmaschine des Kraftfahrzeugs führt, und der große Kühlwasserkreislauf 12 besteht aus dem kleinen Kühlwasserkreislauf 14 und einem Kühlwasserkreislauf der zusätzlich durch einen Kühler des Kraftfahrzeugs verläuft. Mit dem ersten Querschnittsverstellglied 2, welcher in diesem Fall ein Thermostat 15 darstellt, kann somit eingestellt werden, welcher der Kühlwasserkreisläufe 12, 14 eingestellt beziehungsweise aktiviert wird, wodurch die Kühlwassertemperatur reguliert werden kann. Der Durchströmungsquerschnitt wird dabei vorteilhafterweise stufenlos eingestellt, sodass der Volumenstrom des Kühlwassers des jeweiligen Kühlwasserkreislaufs 12, 14 vorteilhaft dosiert werden kann.

Das zweite Querschnittsverstellglied 3 wirkt mit einem Zulauf 16 eines Heizungswärmetauschers 17 zusammen, und weist ebenfalls eine hier nicht dargestellte Durchströmungsöffnung auf, die je nach Drehstellung des Querschnittsverstellglieds 3 beziehungsweise Drehelements 6 mit dem Zulauf 16 derart korrespondiert, dass ein Durchströmungsquerschnitt freigegeben wird. Dadurch kann der Kühlwasserkreislauf des Heizungswärmetauschers 17 ebenfalls in den durch das Querschnittsverstellglied 2 eingestellten Kühlwasserkreislauf miteingebunden werden. Dazu ist vorgesehen, dass die Querschnittsverstellglieder 2 und 3 strömungstechnisch miteinander wirkverbunden sind.

Das dritte Querschnittsverstellglied 4, das vorteilhafterweise strömungstechnisch mit dem Querschnittsverstellglied 3 verbunden ist, wirkt mit einem Zulauf 18 eines Kühlwasserkreislaufs eines Ölkühlers 19 zusammen und weist dazu eine hier ebenfalls nicht dargestellte Durchströmungsöffnung auf, welche mit dem Zulauf 18 derart korrespondiert, dass je nach Drehstellung des Drehelements 7 beziehungsweise des Querschnittsverstellglieds 4 ein Durchströmungsquerschnitt freigegeben wird, sodass der Kühlwasserkreislauf des Ölkühlers 19 ebenfalls in den Gesamtkühlkreislauf 20 miteinbezogen werden kann. Das dritte Querschnittsverstellglied 4 ist vorteilhafterweise an eine hier nicht dargestellte Wasserpumpe angeschlossen, welche das Kühlwasser fördert. Aufgrund der Untersetzungsgetriebe 8 und 9 können die unterschiedlichen Kühlwasserkreisläufe 12, 14, 17 und 19 unabhängig voneinander zu dem Gesamtkühlkreislauf 20 hinzugeschaltet werden, wobei die Untersetzungsgetriebe 8 und 9 vorteilhafterweise eine Untersetzung von 2:1 realisieren.

Die Durchströmungsöffnungen der Querschnittsverstellglieder 3 und 4 sind vorteilhafterweise derartig ausgebildet, dass sie bei einem bestimmten Drehwinkel den jeweiligen Durchströmungsquerschnitt vollständig freigeben oder verschließen. Wenn zum Beispiel das erste Querschnittsverstellglied 2 derartig ausgebildet ist, dass es über einem Bereich von 90° den entsprechenden Durchströmungsquerschnitt einstellt, muss diese Strömungsöffnung des zweiten Querschnittsverstellglieds 3 derart gestaltet sein, dass bei einer Drehung von 45° des Querschnittsverstellglieds 3 der zum Querschnittsverstellglied 3 gehörende maximale Durchströmungsquerschnitt vollständig geöffnet oder verschlossen bleibt. Entsprechendes gilt, unter Berücksichtigung der Untersetzung, für das Querschnittsverstellglied 3.

Die Funktionsweise des Drehschiebers soll anhand des in den Figuren 2a bis 2d dargestellten Schemas näher erläutert werden. Die Figur 2a zeigt in einem schematischen Querschnitt das erste Querschnittsverstellglied 2 aus der Figur 1 mit den Zuläufen 11 und 13 des großen Kühlwasserkreislaufes 12 und des kleinen Kühlwasserkreislaufes 14, welche in einem Winkel von 90° zueinander angeordnet sind. Der Pfeil 21 deutet dabei die Ausgangsposition der Durchströmungsöffnung des Querschnittsverstellglieds 2 an. In dieser Ausgangsposition 21 korrespondiert die Durchströmungsöffnung mit dem Zulauf 11 des großen Kühlwasserkreislaufes, sodass dieser "aktiviert" ist. Es sei hier angemerkt, dass die dargestellten Pfeile in den Figuren 2a) bis 2d) jeweils die Position einer Durchströmungsöffnung oder eines Zulaufes darstellen. Durch Drehen des Querschnittsverstellglieds 2 in die Position 21', also durch Drehen der Durchströmungsöffnung des Querschnittsverstellglieds 2 in die Position 21', um 90°, wird der zunächst freigegebene Durchströmungsquerschnitt verschlossen und ein neuer Durchströmungsquerschnitt freigegeben, der den Zulauf 13 des kleinen Kühlwasserkreislaufes 14 freigibt. Je nach Gestaltung der Durchströmungsöffnungen und der Zuläufe 11 und 13 muss das Querschnittsverstellglied 2 mehr oder weniger weit gedreht werden, um einen Durchströmungsquerschnitt vollständig freizugeben oder zu verschließen.

Die Figur 2b zeigt in einer schematischen Schnittdarstellung das Querschnittsverstellglied 3, welches über das hier nicht dargestellte Untersetzungsgetriebe 8 von dem Querschnittsverstellglied 2 angetrieben wird. Die Ausgangsposition der Durchströmungsöffnung des Querschnittsverstellglieds 3 ist durch den Pfeil 22 und die Position des Zulaufs 16 des Kühlmittelkreislaufs des Heizungswärmetauschers 17 durch den Pfeil 23 markiert. In der Ausgangsposition 22 befindet sich das Querschnittsverstellglied 3 dann, wenn sich das Querschnittsverstellglied 2 in der in Figur 2a dargestellten Ausgangsposition 21 befindet.

Durch Drehen des Querschnittsverstellglieds um 90° in die Position 21' wird das Querschnittsverstellglied 3 aufgrund des Untersetzungsgetriebes mit einer Übersetzung von 2:1 um die Hälfte, also um 45°, auf die Position 22' gedreht, wobei für den Kühlmittelkreislauf des Heizungswärmetauschers 17 kein Durchströmungsquerschnitt freigeben wird.

Um den Heizungswärmetauscher 17 hinzuzuschalten, muss die Durchströmungsöffnung von der Position 22' um 180° gedreht werden. Dazu muss das Querschnittsverstellglied 2 beziehungsweise das Drehelement 5 aufgrund des Untersetzungsverhältnisses von 2:1 des Untersetzungsgetriebes 8 um 360° gedreht werden, sodass es sich in der in Figur 2c dargestellten Position 21" befindet, welche der Position 21' entspricht, sodass sich an der Strömungssituation an dem Querschnittsverstellglied 2 nichts geändert hat, wohingegen, wie in Figur 2d dargestellt, sich das Querschnittsverstellglied 3 um 180° von der Position 22' auf die Position 22" gedreht hat, sodass die Durchströmungsöffnung des Querschnittsverstellglieds 3 mit dem Zulauf 16 des Heizungswärmetauschers 17 korrespondiert. Es ist hierbei also möglich, dass der von dem Querschnittsverstellglied 2 freigegebene Durchströmungsquerschnitt sich nicht verändert und der Heizungswärmetauscher 17 "aktiviert" ist. Aufgrund der vorteilhaften Ausgestaltung der Durchströmungsöffnung des Querschnittsverstellglieds 3 kann nun das Querschnittsverstellglied 2 den Volumenstrom durch Einstellen des Durchströmungsquerschnitts regeln, ohne dass sich der Durchströmungsquerschnitt, der durch das Querschnittsverstellglied 3 freigegeben ist, verändert. Das gleiche Prinzip lässt sich übertragen auf die Querschnittsverstellglieder 3 und 4 beziehungsweise die Drehelemente 6 und 7, die über das Untersetzungsgetriebe 9 miteinander wirkverbunden sind. Da hier ebenfalls eine Übersetzung von 2:1 vorgesehen ist, dreht sich das Querschnittsverstellglied 4 nur um ein Viertel der Drehung des Querschnittsverstellglieds 2. Soll das Querschnittsverstellglied 4 beziehungsweise das Drehelement 7 beispielsweise um 180° gedreht werden, sodass der Ölkühler 19 ebenfalls in den Gesamtkühlwasserkreislauf 20 eingebunden wird, so muss das Querschnittsverstellglied 1 beziehungsweise das Drehelement 5 um 720° gedreht werden.

Es wird somit der Vorteil erreicht, dass die unterschiedlichen Komponenten des Kühlsystems des Kraftfahrzeuges unabhängig voneinander in einen Kühlwasserkreislauf eingebunden werden können, wobei lediglich ein Stellglied, nämlich der Stellmotor 10, geschaltet werden muss. Dadurch ergeben sich Vorteile bezüglich des Platzbedarfs und der Kosten. Vorteilhafterweise sind die Untersetzungsgetriebe 8 und 9 dabei als Planetenrad-, Kegelrad- oder Stirnradgetriebe ausgebildet. Dadurch, dass die Untersetzungsgetriebe 8, 9 verwendet werden, muss der Stellmotor 10 zwar weiter drehen, jedoch ist ein geringeres Drehmoment notwendig, sodass der Stellmotor 10 ebenfalls vorteilhaft klein ausgeführt werden kann. Der Stellmotor 10 und der Drehschieber 1 bilden hierbei eine kompakte elektromechanische Baugruppe.

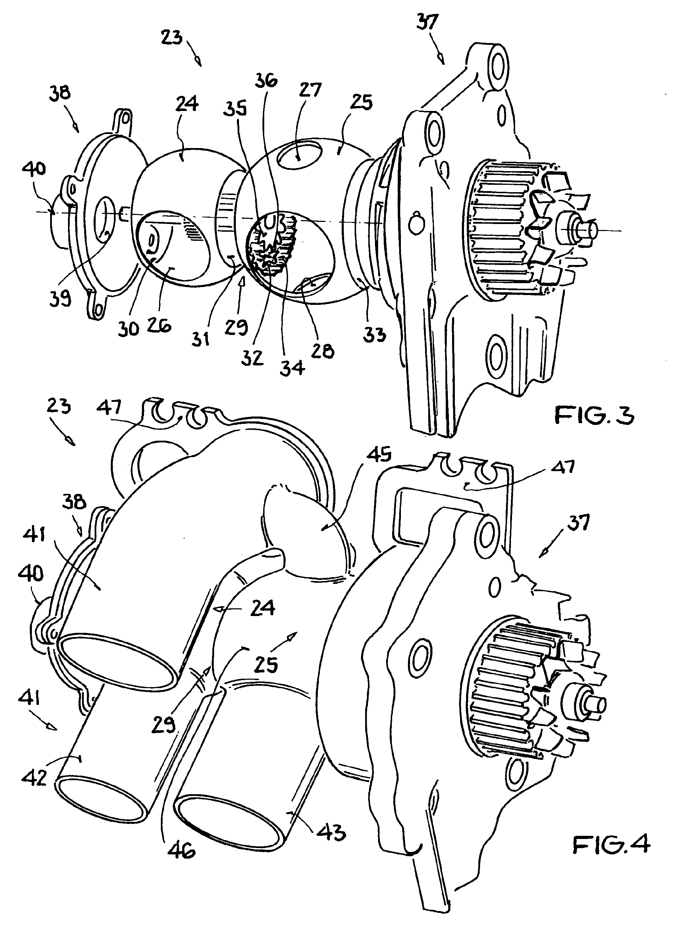

Die Figur 3 zeigt in einer perspektivischen Darstellung ein Ausführungsbeispiel eines erfindungsgemäßen Drei-Stufen-Drehschiebers 23. Der Drei-Stufen-Drehschieber 23 weist zwei Querschnittsverstellglieder 24 und 25 auf, die im Wesentlichen kugelförmig ausgebildet sind. Das Querschnittsverstellglied 24 weist eine kreisförmige Durchströmungsöffnung 26 und das Querschnittsverstellglied 25 eine kreisförmige Durchströmungsöffnung 27 und eine weitere kreisförmige Durchströmungsöffnung 28 auf, welche je nach Drehposition der Querschnittsverstellglieder 24, 25 mit hier nicht dargestellten Zuläufen, wie in dem obigen Beispiel beschrieben, korrespondieren. Die Querschnittsverstellglieder 24 und 25 sind dabei vorteilhafterweise als Drehelemente ausgebildet und mittels eines Planetenradgetriebes 29 mit einem Übersetzungsverhältnis von 2:1 miteinander wirkverbunden. Das Planetenradgetriebe 29 ist dabei vorteilhafterweise in die Querschnittsverstellglieder 24 und 25 zumindest teilweise integriert. Die Querschnittsverstellglieder 24 und 25 weisen an ihren Stirnseiten jeweils Durchströmungsöffnungen 30, 31 und 32 und 33 auf, die jeweils senkrecht zur der Drehachse ausgerichtet sind, um die Querschnittsverstellglieder strömungstechnisch in einen gemeinsamen Kühlkreislauf einzubinden. In der Durchströmungsöffnung 32 ist dabei ein Hohlrad 34 des Planetenradgetriebes 29 ausgebildet, mit dem ein Sonnenrad 35 über Planetenräder 36 zusammenwirkt, deren Planetensteg mit dem Querschnittsverstellglied 24 wirkverbunden ist. An das Querschnittsverstellglied 25 schließt sich eine Wasserpumpe 37 an, die für den entsprechenden Kühlwasserdurchfluss sorgt.

An das Querschnittsverstellglied 24 schließt sich axial ein Querschnittsverstellglied 38 in Form einer Scheibe an, welche eine Durchströmungsöffnung 39 aufweist, die mit einem Zulauf korrespondiert, sodass beispielsweise Kühlwasser eines kleinen Kühlkreislaufes einer Verbrennungskraftmaschine einströmen kann. Auf der Rückseite des Anschlusselements 38 ist außerdem ein Stellmotor 40 angeordnet, welcher die Drehposition des Querschnittsverstellglieds 38 einstellt und damit über ein in dieser Darstellung nicht erkennbares Planetenradgetriebe mit einer Übersetzung von 2:1, die Drehposition des Querschnittsverstellglieds 24, und über das Planetenradgetriebe 29 die Drehposition des Querschnittsverstellglieds 25 .

Figur 4 zeigt den Drei-Stufen-Drehschieber 23 aus der Figur 3 in einer weiteren perspektivischen Darstellung, wobei hierbei ein Zulaufsystem 41 miteingezeichnet ist. Das Zulaufsystem 41 weist drei Zulaufrohre 42, 43 und 44 auf, wobei die Zulaufrohre 42 und 43 direkt zu den Querschnittsverstellgliedern 24 und 25 führen, und von dem Zulaufrohr 44 ein weiteres Zulaufrohr 45, welches einen kleineren Querschnitt aufweist als die Zulaufrohre 42, 43 und 44, ebenfalls zu dem Querschnittsverstellglied 25 führt. Die Zulaufrohre 42, 43 und 45 münden dabei in ein die Querschnittsverstellglieder 24, 25 und 38 und einen Teil der Wasserpumpe 37 umgebendes Strömungsgehäuse 46, dessen Form strömungsgünstig an die Querschnittsverstellglieder 24, 25 und 38 angepasst ist. Das Zulaufsystem 41 weist Halteelemente 47 auf, mittels denen das Zulaufsystem 41 beispielsweise an einem Verbrennungsmotorgehäuse befestigt werden kann.

Mittels des Stellmotors 40 und dem Planetenradgetriebe (29) können die Querschnittsverstellglieder 24, 25 und 38 gedreht werden, dass mindestens ein durch eines der Zulaufrohre 41, 43 und 45 und einer der Durchströmungsöffnungen 26, 28 und 27 gebildeter Durchströmungsquerschnitt freigegeben oder verschlossen beziehungsweise eingestellt werden kann. Die Einstellung geschieht dabei wie in den Figuren 1 und 2 beschrieben. Natürlich sind auch andere Formen der Querschnittsverstellglieder 24, 25 und 38, wie zum Beispiel zylinderförmige Querschnittsverstellglieder 24, 25 und/oder 38 im Rahmen des erfindungsgemäßen Drehschiebers 23 denkbar. Die in den Figuren 3 und 4 dargestellte Kombination aus den kugelförmigen Querschnittsverstellgliedern 24 und 25 und dem scheibenförmigen Querschnittsverstellglied 38 führt zu einer vorteilhaften kompakten Ausführungsform des erfindungsgemäßen Drehschiebers 23.

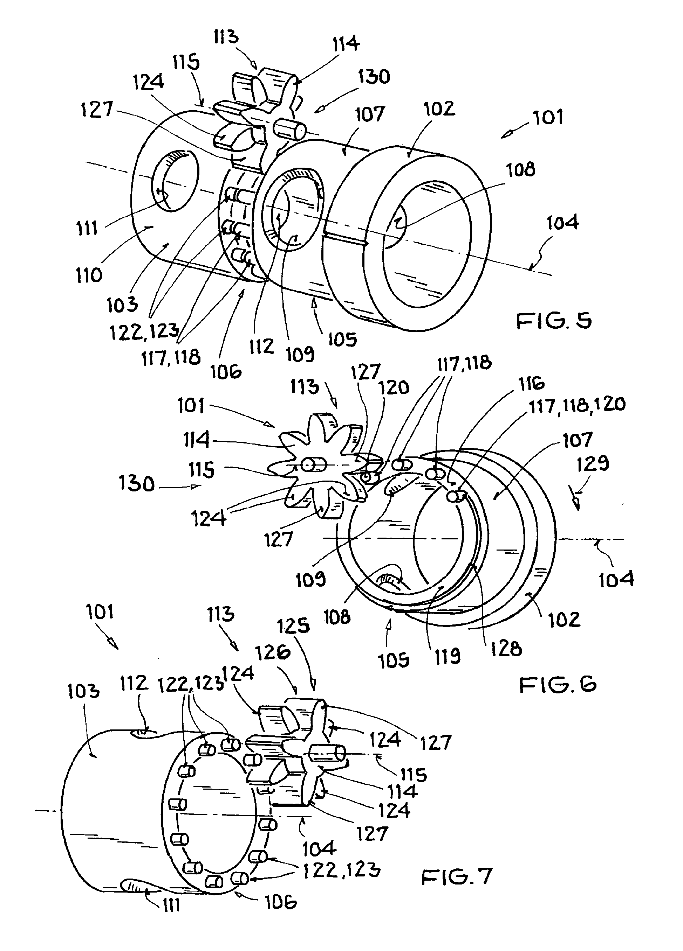

Die Figur 5 zeigt in einer perspektivischen Darstellung ein weiteres Ausführungsbeispiel des erfindungsgemäßen Drehschiebers 101. Der Drehschieber 101 weist ein antreibendes Querschnittsverstellglied 102 und ein antreibbares Querschnittsverstellglied 103 auf, die im Wesentlichen kreiszylinderförmig ausgebildet und jeweils um eine Drehachse 104 verdrehbar gelagert angeordnet sind. Mit anderen Worten sind die Querschnittsverstellglieder 102, 103 koaxial zueinander ausgerichtet. Die Querschnittsverstellglieder 102 und 103 sind mit ihren Enden 105 beziehungsweise 106 nah beieinander gegenüberliegend angeordnet. Das antreibende Querschnittsverstellglied 102 weist in seiner Mantelfläche 107 zwei einander im Wesentlichen gegenüberliegende Durchströmungsöffnungen 108 und 109 auf, die mit hier nicht dargestellten Zu- und/oder Abläufen von Zweigen eines Kühlmittelkreislaufes einer Brennkraftmaschine zusammenwirken. Je nach Drehstellung des Querschnittsverstellglieds 102 und der damit einhergehenden Überschneidung der Durchströmungsöffnung 108 beziehungsweise 109 mit einem der Zu- oder Abläufe wird ein Durchströmungsquerschnitt freigegeben. Das Querschnittsverstellglied 102 ist mit einem hier ebenfalls nicht dargestellten Stellmotor wirkverbunden, der das Querschnittsverstellglied 102 um die Drehachse 104 verdrehen kann. Das Querschnittsverstellglied 103 weist in seiner Mantelfläche 110 ebenfalls zwei Durchströmungsöffnungen 110, 120 auf, die mit entsprechenden Zu- oder Abläufen eines oder mehrer Zweige des Kühlmittelkreislaufs, wie oben beschrieben, zusammenwirken. Ein Medium, wie zum Beispiel das Kühlmittel des Kühlmittelkreislaufs der Brennkraftmaschine kann beispielsweise entlang der Drehachse 104 in die Querschnittsverstellglieder einströmen und je nach Drehstellung der Querschnittsverstellglieder 102 und 103 auf die entsprechenden Zweige des Kühlmittelkreislaufs verteilt werden. Das antreibbare Querschnittsverstellglied 103 ist über ein Getriebe 113 von dem antreibenden Querschnittsverstellglied 102 antreibbar. Das Getriebe 113 weist ein Zahnrad 114 auf, welches um eine Drehachse 115 drehbar gelagert ist, die parallel zur Drehachse 104 verläuft. Das Zahnrad 114 ist im Wesentlichen außerhalb der Querschnittsverstellglieder 102 und 103 an den sich gegenüberliegenden Enden 105 und 106 angeordnet. Das Getriebe weist in dem vorliegenden Ausführungsbeispiel eine Übersetzung von 1:1 auf.

Die Figur 6 zeigt das Querschnittsverstellglied 102 und das Zahnrad 114 in einer perspektivischen Darstellung mit Blick auf das Ende 105. Das Querschnittsverstellglied 102 weist an seiner Stirnfläche 116 ihres Endes 105 in einem Umfangswinkelbereich mehrere Mitnahmeelemente 117 auf, die als Mitnahmeaxialvorsprünge 118 ausgebildet sind. Die Mitnahmeaxialvorsprünge 118 sind im Wesentlichen kreiszylindrisch geformt, wobei ihre Rotationsachse parallel zur Drehachse 104 angeordnet ist. In dem übrigen, mitnahmeelementfreien Umfangswinkelbereich weist das Querschnittsvertellglied 102 einen ringsegmentförmigen Sicherungsaxialvorsprung 119 auf, der sich direkt an die äußersten Mitnahmeaxialvorsprünge 120 der Mitnahmeaxialvorsprünge 118 anschließt. Die Mitnahmeaxialvorsprünge 118 stehen von der Stirnfläche 116 des Querschnittsverstellglieds 102 weiter hervor als der Sicherungsaxialvorsprung 119.

Die Figur 7 zeigt in einer weiteren perspektivischen Darstellung mit Blick auf das Ende 106 das Querschnittsverstellglied 103 und das Zahnrad 114. Das Querschnittsverstellglied 103 weist an seinem Ende 106 von einer Stirnfläche 121 axial hervorstehende, über den gesamten Umfang verteilt angeordnete Mitnahmeelemente 122 auf, die als Mitnahmeaxialvorsprünge 123 ausgebildet sind. Aus Gründen der Übersichtlichkeit sind hierbei nicht alle Mitnahmeelemente 122/Mitnahmeaxialvorsprünge 123 mit Bezugszeichen versehen.

Jeder zweite Zahn 124 des Zahnrads 114 ist in dem vorliegenden Ausführungsbeispiel der Figuren 5 bis 7 auf der mit dem antreibenden Querschnittsverstellglied 102 zusammenwirkenden Seite 125 des Zahnrads 114 axial verkürzt ausgebildet. Auf der mit dem Querschnittsverstellglied 103 zusammenwirkenden Seite 126 des Zahnrads 114 sind sämtliche Zähne des Zahnrads 114 gleich ausgebildet, sodass jeder Zahn mit den Mitnahmeelementen 122 beziehungsweise den Mitnahmeaxialvorsprüngen 123 des Querschnittsverstellglieds 103 zusammenwirken kann. Das Querschnittsverstellglied 103 steht somit stets im Eingriff mit dem Zahnrad 114, wodurch es sich nicht unabhängig von dem Zahnrad 114 verdrehen kann.

Ist das antreibende Querschnittsverstellglied 102 derart gedreht, dass sich das Zahnrad in dem die Mitnahmeaxialvorsprünge 118 aufweisenden Umfangswinkelbereich befindet, so wirken sämtliche Zähne des Zahnrades mit den Mitnahmeaxialvorsprüngen 118 zusammen, sodass eine Drehbewegung beziehungsweise eine Kraft auf das Zahnrad 114 und somit auch auf das Querschnittsverstellglied 103 übertragen werden kann. Wird das Querschnittsverstellglied 102 aus dem die Mitnahmeaxialvorsprünge 118 aufweisenden Umfangswinkelbereich herausgedreht, greifen die verkürzt ausgebildeten beziehungsweise schmaleren Zähne 124 des Zahnrads 114 axial gesehen an dem Sicherungsaxialvorsprung 119 vorbei, wohingegen die breiteren beziehungsweise normal ausgebildeten Zähne 127 des Zahnrads 114 mit dem Sicherungsaxialvorsprung 119 zusammenwirken, wie in der Figur 6 gezeigt. Durch die Verdrehbewegung des Querschnittsverstellglieds 102 kommt einer der breiteren Zähne 127 auf der äußeren Mantelfläche 128 des Sicherungsaxialvorsprungs 119 zum Liegen, sodass das Zahnrad 114 nicht weiter verdreht werden kann. In der in der Figur 6 vorliegenden Verdrehstellung liegt einer der breiteren Zähne 127 auf der Mantelfläche 128 des Sicherungsaxialvorsprungs 119 und ein weiterer breiterer Zahn 127 auf dem äußersten Mitnahmeaxialvorsprung 120 auf, wobei der dazwischen liegende, verkürzt ausgebildete Zahn 124 an dem Sicherungsaxialvorsprung 119 axial vorbei greift. Die schmaleren, beziehungsweise verkürzt ausgebildeten Zähne 124 sind zweckmäßigerweise zu dem Sicherungsaxialvorsprung 119 axial beabstandet.

Wird das Querschnittsverstellglied 102 weiter in Richtung des Pfeils 129 gedreht, so liegt auch der zweite breitere Zahn 127 auf der Mantelfläche 128 des Sicherungsaxialvorsprungs 119 auf, da die Mantelfläche des Mitnahmeaxialvorsprungs 120 vorteilhafterweise direkt in die Mantelfläche 128 übergeht. Durch die vorteilhafte Ausbildung kann das Querschnittsverstellglied 102 in Richtung des Pfeils 129 weitergedreht werden, ohne dass eine Kraft auf das Zahnrad 114 übertragen wird. Durch den Sicherungsaxialvorsprung 119 und die vorteilhaft ausgebildeten Zähne 124, 127 des Zahnrads 114 ist somit eine Verdrehsicherung 130 für das Zahnrad 114 beziehungsweise das Querschnittsverstellglied 103 gebildet. Da das Zahnrad 114 in jeder Verdrehstellung des Querschnittsverstellglieds 103 mit dem Querschnittsverstellglied 103 beziehungsweise den Mitnahmeelementen 122 des Querschnittsverstellglieds in Eingriff steht, lässt sich das Querschnittsverstellglied 103 nicht verdrehen, wenn das Zahnrad 114 durch die Verdrehsicherung 130 arretiert ist.

Durch die in den Figuren 5 bis 7 dargestellte, vorteilhafte Ausbildung des Drehschiebers 101 ist es möglich die Querschnittsverstellglieder 102 und 103 beziehungsweise die durch die Querschnittsverstellglieder 102 und 103 einstellbaren Durchströmungsquerschnitte individuell einzustellen/zu schalten. Das antreibende Querschnittsverstellglied 102 bewirkt bei einer vollen Umdrehung eine Verdrehung des Querschnittsverstellglieds 103, die im Wesentlichen dem die Mitnahmeelemente 117 aufweisenden Umfangswinkelbereich entspricht. Um also eine vollständige Umdrehung des Querschnittsverstellglieds 103 zu erreichen muss das Querschnittsverstellglied 102 lediglich mehrmals um 360° gedreht werden. Insbesondere die Anzahl der Mitnahmeelemente 117 bestimmt den Verdrehwinkel des Querschnittsverstellglieds 103. In dem mitnahmeelementfreien Umfangswinkelbereich des Querschnittsverstellglieds 102 kann das Querschnittsverstellglied 102 unabhängig von dem Querschnittsverstellglied 103 verdreht werden, sodass Durchströmungsquerschnitte mittels der Durchströmungsöffnungen 108 und 109 individuell eingestellt werden können. Durch die Verdrehsicherung 130 wird ermöglicht, dass sich das Querschnittsverstellglied 103 nicht von selbst beziehungsweise ungewollt verdreht beziehungsweise umstellt, wenn das Querschnittsverstellglied 102 mit seinen Mitnahmeelementen 117 nicht im Eingriff mit dem Zahnrad 114 steht. Durch die Anordnung des Getriebes 113 beziehungsweise des Zahnrads 114 außerhalb der Querschnittsverstellglieder 102 und 103 beziehungsweise des Strömungsquerschnittes der Querschnittsverstellglieder 102 und 103, ist das Getriebe 113 vorteilhaft vor Schmutzpartikeln, die von dem durch den Drehschieber 101 strömenden Medium/Kühlmittel mitgeführt werden geschützt.

In einer weiteren vorteilhaften, hier nicht dargestellten, Ausgestaltung ist mindestens ein weiteres Querschnittsverstellglied vorgesehen, welches sich an das Querschnittsverstellglied 103 anschließt und über ein dem Getriebe 113 entsprechendes Getriebe mit dem Querschnittsverstellglied 103 wirkverbunden ist. Wobei dann das Querschnittsverstellglied 103 in Bezug zu dem weiteren Querschnittsverstellglied als antreibendes Querschnittsverstellglied ausgeführt ist und somit an seinem dem Ende 106 gegenüberliegenden Ende entsprechend dem Ende 105 des Querschnittsverstellglieds 102 ausgebildet ist, wobei der Mitnahmeelemente aufweisende Umfangswinkelbereich natürlich zu dem des Querschnittsverstellglieds 102 variieren kann. Natürlich ist es auch denkbar, das Getriebe 113 als Übersetzung- oder Untersetzungsgetriebe auszubilden. Prinzipiell sind beliebig viele Querschnittsverstellglieder wie oben beschrieben miteinander wirkverbindbar, wobei ein einziger Stellmotor zum individuellen Einstellen der Durchströmungsquerschnitte ausreicht. Alternativ zu den hier gezeigten Mitnahmeaxialvorsprüngen 118 beziehungsweise 123 können die Mitnahmeelemente 117, 122 als Verzahnung ausgebildet sein.

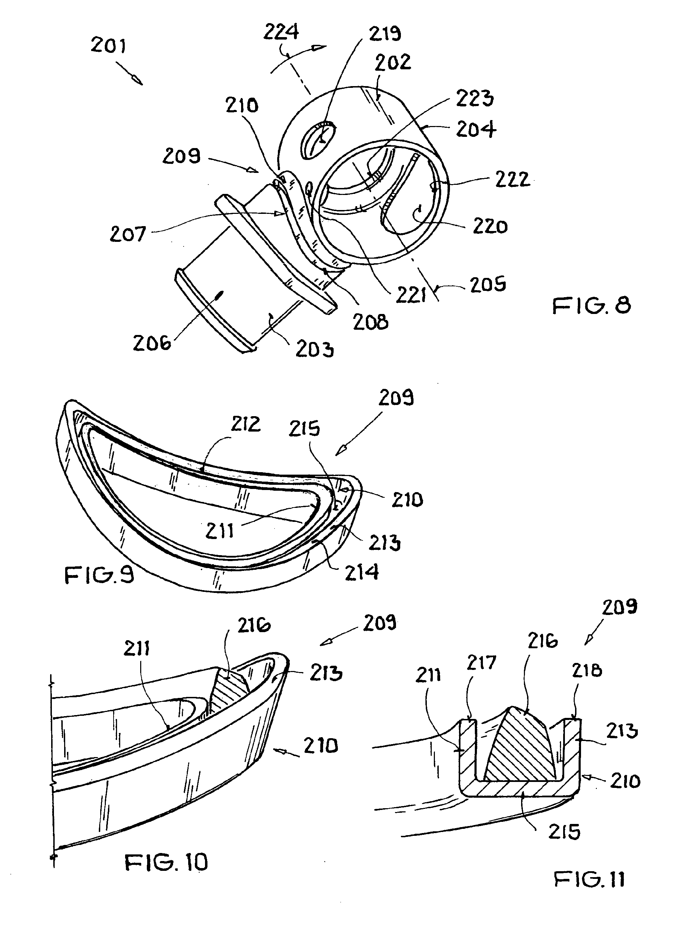

Die Figur 8 zeigt einen Drehschieber 201 mit einem drehbar gelagerten Schiebeglied 202 und einem Grundglied 203. Das Schieberglied 202 ist dabei als ein im Wesentlichen zylinderförmiges Querschnittsverstellglied 204 ausgebildet, welches um seine Achse 205 drehbar gelagert ist. Das Grundglied 203 wird von einem radial zum Querschnittsverstellglied 204 ausgerichteten, im Wesentlichen kreiszylinderförmigen Stutzen 206 gebildet. An seinem dem Querschnittsverstellglied 204 zugewandten Ende 207 weist der Stutzen 206 beziehungsweise das Grundglied 203 eine dem Querschnittsverstellglied 204 angepasste Formgebung auf. Zwischen dem Stutzen 206 und dem Querschnittsverstellglied 204 sind dabei ein Federelement 208 und eine Dichtung 209 derart angeordnet, dass ein Dichtungsprofil 210 der Dichtung 209 durch das Federelement 208 beaufschlagt gegen das Querschnittsverstellglied 204 gedrückt wird. Federelement 208 und Dichtung 209 beziehungsweise Dichtungsprofil 210 sind ringförmig ausgebildet und umschließen einen hier nicht dargestellten Durchströmungsquerschnitt des Grundglieds 203. In den Figuren 9 bis 11 sind Elemente, die bereits aus der Figur 8 bekannt sind, mit den gleichen Bezugszeichen versehen.

Die Figur 9 zeigt das Dichtungsprofil 210 in einer perspektivischen Darstellung. Das Dichtungsprofil 210 ist dabei als ein aus Teflon bestehendes U-förmiges Dichtungsprofil 210 ausgebildet, bei dem ein eine innere Dichtungswand 211 bildender Schenkel 212 und ein eine äußere Dichtungswand 213 bildender Schenkel 214 mit einem Steg 215 einstückig verbunden sind. Das U-förmige Dichtungsprofil 210 der Dichtung 209 ist dabei vorteilhafterweise aus Teflon hergestellt.

Die Figur 10 zeigt einen Abschnitt der Dichtung 209 in einer weiteren perspektivischen Darstellung, wobei in dem U-förmigen Dichtungsprofil 210 eine beispielhafte Dichtlippe 216 einliegt. Die Dichtlippe 216 und das U-förmige Dichtungsprofil 210 bilden dabei die Dichtung 209. Die Dichtlippe 216 ist vorteilhafterweise aus einem Elastomerwerkstoff hergestellt. In der Figur 10 ist sie geschnitten dargestellt, sodass ihr Querschnitt erkennbar ist. Durch die unterschiedlichen Materialien (Elastomer/Teflon) sind die Dichtwände 211 und 213 steifer ausgebildet als die Dichtlippe 216. Die Dichtlippe weist dabei im hier dargestellten unbelasteten, beziehungsweise kraftfreien Zustand seitliche Abstände zu den Dichtwänden 211 und 213 auf.

Die Figur 11 zeigt einen Ausschnitt der Dichtung 209, wobei neben der Dichtlippe 216, wie in Figur 10 dargestellt, auch das Dichtprofil 210 im Querschnitt dargestellt ist. Durch die seitliche Beabstandung der Dichtlippe 216 zu den Dichtwänden 211 und 213 ist der Dichtlippe 216 ein Bewegungsspielraum in beide Richtungen gegeben, in dem sich die Dichtlippe 216 bewegen, verlagern beziehungsweise verformen kann. Die freien Ende 217 und 218 der Dichtwände 211 und 213 liegen vorteilhafterweise im montierten Zustand des Drehschiebers 201 ebenfalls an dem Querschnittsverstellglied 204, wie in der Figur 8 dargestellt, an.

Das Schiebeglied 202 beziehungsweise das Querschnittsverstellglied 204 weist mehrere in seiner Mantelfläche ausgebildete Querschnittsverstellglied-Durchströmungsquerschnitte 219, 220 und 221 auf. An seinen Stirnenden weist das Querschnittsverstellglied 204 darüber hinaus Öffnungen 222 und 223 für den Zu- oder Ablauf eines Strömungsmediums auf. Zum Einstellen eines Durchströmungsquerschnittes wird das Querschnittsverstellglied 204 beispielsweise in Richtung des Pfeils 224 gedreht beziehungsweise verlagert. Die Querschnittsverstellglied-Durchströmungsquerschnitte 219, 220 und 221 werden durch die Drehbewegung in Richtung des Pfeils 224 in eine Überschneidungsposition mit dem in dem Stutzen 206 ausgebildeten Grundglied-Durchströmungsquerschnitt gebracht. Durch den Grundglied-Durchströmungsquerschnitt kann ein flüssiges oder gasförmiges Medium durch den Stutzen 206 beziehungsweise das Grundglied 203 strömen. Der Überschneidungsquerschnitt bildet dabei den eingestellten Durchströmungsquerschnitt des Drehschiebers 201. Ab einem Verdrehwinkel von ungefähr 90° überfährt in dem vorliegenden Ausführungsbeispiel die Dichtung 209 die in der Mantelfläche des Querschnittsverstellglieds 204 ausgebildete Öffnung 220. Durch die vorteilhafte Ausgestaltung der Dichtung 209 wird ein Verklemmen und/oder Umstülpen der Dichtlippe 216 verhindert. Da die Dichtwände 211 und 213 steifer ausgebildet sind als die Dichtlippe 216, wird letztere, wenn sie gegen eine der Dichtwände 211 oder 213 durch die Drehbewegung des Querschnittsverstellglieds 204 gedrückt wird, von der entsprechenden Dichtwand (211 oder 213) gestützt. Durch die vorteilhafte Dichtung 209 wird ein Entweichen des Mediums auf einfache Art und Weise verhindert, wobei ein Verklemmen und/oder Umstülpen der Dichtlippe 216 verhindert wird. Alternativ zu dem dargestellten Stutzen 206 kann das Grundglied 203 auch als ein das Querschnittsverstellglied 204 umschließendes beziehungsweise aufweisendes Drehschieber-Gehäuse ausgebildet sein. Durch das Federelement 207, das zweckmäßigerweise als Druckfeder ausgebildet ist, wird das Dichtungsprofil 210 und damit auch die Dichtlippe 216 gleichmäßig gegen das Querschnittsverstellglied 204 gedrückt, sodass umfänglich eine gleichmäßige Dichtwirkung erzielt wird.

Alternativ zu der Materialwahl zum Einstellen der Steifigkeit der Dichtlippe 216 und des Dichtungsprofils 210 ist es ebenfalls denkbar, durch Formgebung der Dichtlippe 216 beziehungsweise des Dichtungsprofils 210 die jeweilige Steifigkeit zu beeinflussen.

Die hier beschriebene Dichtung 209 ist vorteilhafterweise in einem weiteren, hier nicht dargestellten Ausführungsbeispiel, als Dichtung bei mindestens einer der in den Figuren 1 bis 7 beschriebenen Drehschiebern vorgesehen.

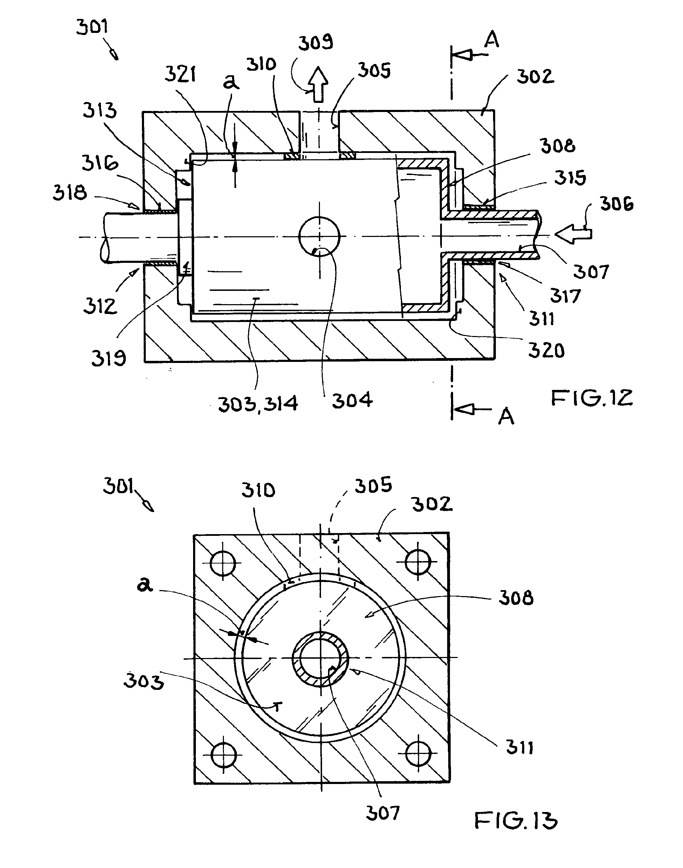

Die Figur 12 zeigt in einer schematischen Schnittdarstellung ein weiteres Ausführungsbeispiel eines erfindungsgemäßen Drehschiebers 301. Der Drehschieber 301 weist ein Grundglied 302 sowie ein darin drehbar gelagertes Querschnittsverstellglied 303 auf. Das Querschnittsverstellglied 303 ist wie die Querschnittsverstellglieder der vorhergehenden Figuren hohl ausgebildet und weist in seiner Mantelfläche eine Durchströmungsöffnung 304 auf, die in bestimmten Drehwinkelstellungen des Querschnittsverstellglieds 303 mit einer Durchströmungsöffnung 305 des Grundglieds 302 einen Überschneidungsbereich bildet. In der hier dargestellten Drehwinkelstellung des Querschnittsverstellglieds 303 befindet sich das Querschnittsverstellglied 303 jedoch in einer Stellung, in der die Durchströmungsöffnung 304 nicht mit der Durchströmungsöffnung 305 kommuniziert. Im Betrieb des Drehschiebers 301 kann beispielsweise ein Kühlmittel in Richtung des Pfeils 306 durch die eine Öffnung 307 aufweisende Stirnseite 308 des Querschnittsverstellglieds 303 in das Querschnittsverstellglied 303 einströmen und bei einem entsprechenden Überschneidungsbereich der Durchströmungsöffnungen 304 und 305 in Richtung des Pfeils 309 ausströmen. Damit nicht ungewollt Kühlmittel aus dem Drehschieber 301 herausströmt, ist im Bereich der Durchströmungsöffnung 305 eine Dichtung 310 dem Querschnittsverstellglied 303 und dem Grundglied 302 zwischengeschaltet. Die Dichtung 310 ist dabei vorteilhafterweise entsprechend der Dichtung 209 aus den vorhergehenden Figuren ausgebildet.

Das Querschnittsverstellglied 303 weist weiterhin zwei Wellenabschnitte 311 und 312 auf, wobei der Wellenabschnitt 311 an der Stirnseite 308 und der Wellenabschnitt 312 an der der Stirnseite 308 gegenüberliegenden Stirnseite 313 des Querschnittsverstellglieds 303 angeordnet sind. Die Wellenabschnitte 311 und 312 weisen einen Durchmesser auf, der kleiner ist als der Durchmesser der Mantelfläche 314 des Querschnittsverstellglieds 303. Das Grundglied 302 weist zwei Lagersitze 315, 316 auf, die zusammen mit den Wellenabschnitten 311 und 312 jeweils ein Gleitlager 317 beziehungsweise 318 bilden. Das Querschnittsverstellglied 303 ist somit vorteilhaft beidseitig in dem Grundglied 302 mittels der Gleitlager 317, 318 drehbar gelagert.

Das Querschnittsverstellglied 303 ist dabei in dem Grundglied 302 derart angeordnet, dass es radial beabstandet zu dem Grundglied 302 ist. Das bedeutet, dass über den Umfang des Querschnittsverstellglieds 303 ein Abstand a zwischen der Mantelfläche 314 des Querschnittsverstellglieds 303 und der Innenseite des Grundglieds 302 besteht. Der Abstand a ist vorteilhafterweise derart gewählt, dass ein im Kühlmittelkreislauf angenommener, vorhandener Festkörper bestimmbarer Größe nicht zwischen dem Querschnittsverstellglied 303 und dem Grundglied 302 verklemmen kann. Entsprechend der Größe des Abstands a wird die Höhe der Dichtung 310 gewählt, sodass diese stets dichtend an dem Querschnittsverstellglied 303 und an dem Grundglied 302 anliegt. Durch die beidseitige Lagerung des Querschnittsverstellglieds 303 wird gewährleistet, dass im Betrieb zum Einen das Querschnittsverstellglied 303 nicht verklemmen und verkippen und zum Anderen der Festkörper sich nicht zwischen dem Querschnittsverstellglied 303 und dem Grundglied 302 ansammeln und/oder verklemmen kann. Das Querschnittsverstellglied 303 ist mit anderen Worten mittels einer Welle in dem Grundglied 302 zumindest radial beabstandet dazu angeordnet.

Eine axiale Beabstandung des Querschnittsverstellglieds 303 zu dem Grundglied 302 kann beispielsweise durch eine Wellenschulter 319 auf dem Wellenabschnitt 312 und/oder durch Anschläge 320, 321 des Grundglieds 302 gebildet werden.

Die Figur 13 zeigt den Drehschieber 301 in einer Draufsicht auf die Stirnseite 308 des Querschnittsverstellglieds 303 entsprechend dem Schnitt A-A aus der Figur 12. Hierbei ist deutlich der allumfängliche Abstand a zwischen dem Querschnittsverstellglied 303 und dem Grundglied 302 zu erkennen.

Die in den Figuren 12 und 13 beschriebene Lagerung beziehungsweise Anordnung des Querschnittsverstellglieds 303 in dem Grundglied 302 ist selbstverständlich auch auf die in den Figuren 1 bis 11 dargestellten Drehschieber entsprechend anwendbar.

### BEZUGSZEICHENLISTE

- 1: Drei-Stufen-Drehschieber
- 2: Querschnittsverstellglied
- 3: Querschnittsverstellglied
- 4: Querschnittsverstellglied
- 5: Drehelement
- 6: Drehelement
- 7: Drehelement
- 8: Untersetzungsgetriebe
- 9: Untersetzungsgetriebe
- 10: Stellmotor
- 11: Zulauf
- 12: großer Kühlkreislauf
- 13: Zulauf
- 14: kleiner Kühlkreislauf
- 15: Thermostat
- 16: Zulauf
- 17: Heizungswärmetauscher
- 18: Zulauf
- 19: Ölkühler
- 20: Gesamtkühlkreislauf
- 21: Ausgangsposition
- 21': Position
- 21": Position
- 22: Ausgangsposition
- 22': Position
- 22": Position
- 23: Drei-Stufen-Drehschieber
- 24: Querschnittsverstellglied
- 25: Querschnittsverstellglied
- 26: Öffnung
- 27: Öffnung
- 28: Öffnung
- 29: Planetenradgetriebe
- 30: Durchströmungsöffnung
- 31: Durchströmungsöffnung
- 32: Durchströmungsöffnung
- 33: Durchströmungsöffnung
- 34: Hohlrad
- 35: Sonnenrad
- 36: Planetenrad
- 37: Wasserpumpe
- 38: Querschnittsverstellglied
- 39: Durchströmungsöffnung
- 40: Stellmotor
- 41: Zulaufsystem
- 42: Zulaufrohr
- 43: Zulaufrohr
- 44: Zulaufrohr
- 45: Zulaufrohr
- 46: Gehäuse
- 47: Halteelement

- 101: Drehschieber
- 102: Querschnittsverstellglied
- 103: Querschnittsverstellglied
- 104: Drehachse
- 105: Ende
- 106: Ende
- 107: Mantelfläche
- 108: Durchströmungsöffnungen
- 109: Durchströmungsöffnungen
- 110: Mantelfläche
- 111: Durchströmungsöffnung
- 112: Durchströmungsöffnung
- 113: Getriebe
- 114: Zahnrad
- 115: Drehachse
- 116: Stirnfläche
- 117: Mitnahmeelemente
- 118: Mitnahmeaxialvorsprünge
- 119: Sicherungsaxialvorsprung
- 120: äußerste Mitnahmeaxialvorsprünge
- 121: Stirnfläche
- 122: Mitnahmeelement
- 123: Mitnahmeaxialvorsprung
- 124: Zahn
- 125: Seite
- 126: Seite
- 127: Zahn
- 128: Mantelfläche
- 129: Pfeil
- 130: Verdrehsicherung

- 201: Drehschieber
- 202: Schieberglied
- 203: Grundglied
- 204: Querschnittsverstellglied
- 205: Achse
- 206: Stutzen
- 207: Ende
- 208: Federelement
- 209: Dichtung
- 210: U-förmiges Dichtungsprofil
- 211: Dichtwand
- 212: Schenkel
- 213: Dichtwand
- 214: Schenkel
- 215: Steg
- 216: Dichtlippe
- 217: Ende
- 218: Ende
- 219: Querschnittsverstellglied-Durchströmungsquerschnitt
- 220: Querschnittsverstellglied-Durchströmungsquerschnitt
- 221: Querschnittsverstellglied-Durchströmungsquerschnitt
- 222: Öffnung
- 223: Öffnung

- 301: Drehschieber
- 302: Grundglied
- 303: Querschnittsverstellglied
- 304: Durchströmungsöffnung
- 305: Durchströmungsöffnung
- 306: Pfeil
- 307: Öffnung
- 308: Stirnseite
- 309: Pfeil
- 310: Dichtung
- 311: Wellenabschnitt
- 312: Wellenabschnitt
- 313: Stirnseite
- 314: Mantelfläche
- 315: Lagersitz
- 316: Lagersitz
- 317: Gleitlager
- 318: Gleitlager
- 319: Wellenschulter
- 320: Anschlag
- 321: Anschlag

- a: Abstand

## Patentansprüche

1. Drehschieber, insbesondere für einen mehrere Zweige aufweisenden Kühlmittelkreislauf einer Brennkraftmaschine, mit mehreren Querschnittsverstellgliedern (2, 3, 4; 24, 25, 38; 102, 103) und mindestens eine die Querschnittsverstellglieder (2,3,4;24,25,38;102,103) miteinander koppelnde Einrichtung, **dadurch gekennzeichnet, dass** die die Querschnittsverstellglieder (2, 3, 4; 24, 25, 38; 102, 103) miteinander kopplende Einrichtung im gekoppelten Zustand einen Drehwinkelunterschied zwischen den Querschnittsverstellgliedern (2,3,4;24,25,38;102,103) erzeugt.

2. Drehschieber nach Anspruch 1, **dadurch gekennzeichnet, dass** die Einrichtung ein Drehgetriebe ist.

3. Drehschieber nach einem der vorhergehenden Ansprüche, **dadurch gekennzeichnet, dass** die Querschnittsverstellglieder (2,3,4;24,25,38) unterschiedlichen Drehelementen (5,6,7) zugeordnet sind, die jeweils über das Drehgetriebe miteinander wirkverbunden sind.

4. Drehschieber nach einem der vorhergehenden Ansprüche, **dadurch gekennzeichnet, dass** das Drehgetriebe als Untersetzungsgetriebe (8,9) ausgebildet ist.

5. Drehschieber nach einem der vorhergehenden Ansprüche, **dadurch gekennzeichnet, dass** das Drehgetriebe als Übersetzungsgetriebe ausgebildet ist.

6. Drehschieber nach einem der vorhergehenden Ansprüche, **dadurch gekennzeichnet, dass** zwei oder drei Drehelemente (5,6,7) vorhanden sind.

7. Drehschieber nach einem der vorhergehenden Ansprüche, **dadurch gekennzeichnet, dass** der Drehschieber (1;23) ein Klimastellglied eines Kraftfahrzeugs ist.

8. Drehschieber nach einem der vorhergehenden Ansprüche, **dadurch gekennzeichnet, dass** ein Querschnittsverstellglied (2) eines ersten Drehelements (5) als Thermostat ausgebildet ist.

9. Drehschieber nach einem der vorhergehenden Ansprüche **dadurch gekennzeichnet, dass** ein Querschnittsverstellglied (3) eines zweiten Drehelements (6) als Heizungswärmetauscher-Regler ausgebildet ist.

10. Drehschieber nach einem der vorhergehenden Ansprüche, **dadurch gekennzeichnet, dass** ein Querschnittsverstellglied (4) eines dritten Drehelements (7) als Ölkühlkreislauf-Regler ausgebildet ist.

11. Drehschieber nach einem der vorhergehenden Ansprüche, **dadurch gekennzeichnet, dass** mindestens zwei Querschnittsverstellglieder (2,3,4;24,25,38) strömungstechnisch miteinander verbunden sind.

12. Drehschieber nach einem der vorhergehenden Ansprüche, **dadurch gekennzeichnet, dass** das erste Drehelement (5;24) mittels eines Stellmotors (10;40) antreibbar ist.

13. Drehschieber nach einem der vorhergehenden Ansprüche, **dadurch gekennzeichnet, dass** das Drehgetriebe als Planeten-(29), Kegel- oder Stirnradgetriebe ausgebildet ist.

14. Drehschieber nach einem der vorhergehenden Ansprüche, **dadurch gekennzeichnet, dass** die Querschnittsverstellglieder (2,3,4) einstückig mit den Drehelementen (5,6,7) ausgebildet sind.

15. Drehschieber nach einem der vorhergehenden Ansprüche, gekennzeichnet durch mindestens ein antreibendes Querschnittsverstellglied (102) und mindestens ein von dem antreibenden Querschnittsverstellglied (102) über die als Getriebe (113) ausgebildete Einrichtung antreibbares Querschnittsverstellglied (103), wobei das Getriebe (113) mindestens ein Zahnrad (114) aufweist, das mit Mitnahmeelementen (117,122) jedes Querschnittsverstellglieds (102,103) zusammenwirkt.

16. Drehschieber nach einem der vorhergehenden Ansprüche, **dadurch gekennzeichnet, dass** die Mitnahmeelemente (122) des antreibbaren Querschnittsverstellglieds (103) über den gesamten Umfang und die Mitnahmeelemente (117) des antreibenden Querschnittsverstellglieds (102) nur über mindestens einen Umfangswinkelbereich verteilt angeordnet sind.

17. Drehschieber nach einem der vorhergehenden Ansprüche, **dadurch gekennzeichnet, dass** die Mitnahmeelemente (117,18) an den sich gegenüberliegenden Enden (105,106) der Querschnittsverstellglieder (102,103) angeordnet sind.

18. Drehschieber nach einem der vorhergehenden Ansprüche, **dadurch gekennzeichnet, dass** die Mitnahmeelemente (117,122) als Mitnahmeaxialvorsprünge (118,123) ausgebildet sind.

19. Drehschieber nach einem der vorhergehenden Ansprüche, **dadurch gekennzeichnet, dass** die Drehachse (115) des Zahnrads (114) parallel zu den Drehachsen (14) der Querschnittsverstellglieder (102,103) verläuft.

20. Drehschieber nach einem der vorhergehenden Ansprüche, **dadurch gekennzeichnet, dass** das Getriebe (113) eine Verdrehsicherung (130) aufweist.

21. Drehschieber nach einem der vorhergehenden Ansprüche, **dadurch gekennzeichnet, dass** die Verdrehsicherung (130) von dem Zahnrad (114) und dem antreibenden Querschnittsverstellglied (102) gebildet ist.

22. Drehschieber nach einem der vorhergehenden Ansprüche, **dadurch gekennzeichnet, dass** das antreibende Querschnittsverstellglied (102) in mindestens einem mitnahmefreien Umfangswinkelbereich einen ringsegmentförmigen Sicherungsaxialvorsprung (119) aufweist.

23. Drehschieber nach einem der vorhergehenden Ansprüche, **dadurch gekennzeichnet, dass** die Mitnahmeaxialvorsprünge (118) axial weiter hervorstehen als der Sicherungsaxialvorsprung (119).

24. Drehschieber nach einem der vorhergehenden Ansprüche, **dadurch gekennzeichnet, dass** einige der Zähne (124) des Zahnrads (114) auf der mit dem antreibenden Querschnittsverstellglied (102) zusammenwirkenden Seite (125) des Zahnrads (114) axial verkürzt ausgebildet sind.

25. Drehschieber nach einem der vorhergehenden Ansprüche, **dadurch gekennzeichnet, dass** die breiteren Zähne (127) in bestimmten Drehstellungen mit dem Sicherungsaxialvorsprung (119) zusammenwirken.

26. Drehschieber nach einem der vorhergehenden Ansprüche, **dadurch gekennzeichnet, dass** die schmaleren Zähne (124) zu dem Sicherungsaxialvorsprung (119) axial beabstandet sind.

27. Drehschieber nach einem der vorhergehenden Ansprüche, **dadurch gekennzeichnet, dass** das Getriebe (113) außerhalb des Strömungsquerschnittes der Querschnittsverstellglieder (102,103) angeordnet ist.

28. Drehschieber nach einem der vorhergehenden Ansprüche, **dadurch gekennzeichnet, dass** das Getriebe (113) eine Übersetzung von 1:1 aufweist.

29. Drehschieber nach einem der vorhergehenden Ansprüche, **dadurch gekennzeichnet, dass** das Getriebe (113) ein Übersetzungs- oder Untersetzungsgetriebe ist.

30. Drehschieber nach einem der vorhergehenden Ansprüche, gekennzeichnet durch ein am Querschnittsverstellglied (204) unter Zwischenschaltung mindestens einer Dichtung (209) anliegendes Grundglied (203), wobei die Dichtung (209) mindestens eine Dichtwand (211,213) und eine benachbart dazu angeordnete Dichtlippe (216) aufweist, wobei die Dichtwand (211,213) steifer als die Dichtlippe (216) ausgebildet ist.

31. Drehschieber nach Anspruch 30, **dadurch gekennzeichnet, dass** die Dichtwand (211,213) gegenüber der Dichtlippe (216) aus steiferem beziehungsweise weniger elastischem Material besteht.

32. Drehschieber nach einem der Ansprüche 30 oder 31, **dadurch gekennzeichnet, dass** die Dichtlippe (216) beidseitig von Dichtwänden (211,213) benachbart ist.

33. Drehschieber nach einem der Ansprüche 30 bis 32, **dadurch gekennzeichnet, dass** die Dichtwände (211,213) von den Schenkeln (212,214) eines U-förmigen Dichtungsprofils (210) gebildet sind und dass sich die Dichtlippe (216) im Inneren des U-förmigen Dichtungsprofils (210) befindet.

34. Drehschieber nach einem der Ansprüche 30 bis 33, **dadurch gekennzeichnet, dass** die Dichtwand (211,213) von einem Schenkel (212,214) eines L-förmigen Dichtungsprofils gebildet wird und dass die Dichtlippe (216) auf dem anderen Schenkel (212,214) angeordnet ist.

35. Drehschieber nach einem der Ansprüche 30 bis 34, **dadurch gekennzeichnet, dass** zwischen dem Dichtungsprofil (210) und dem Grundglied (203) ein Federelement (208) angeordnet ist.

36. Drehschieber nach einem der Ansprüche 30 bis 35, **dadurch gekennzeichnet, dass** die Dichtlippe (216) zu der Dichtwand (211,213) oder zu den Dichtwänden (211,213) im kraftfreien Zustand einen seitlichen Abstand beziehungsweise seitliche Abstände aufweist.

37. Drehschieber nach einem der Ansprüche 30 bis 36, **dadurch gekennzeichnet, dass** die Dichtwand (211,213) und/oder die Dichtwände (211,213) aus Teflon besteht/bestehen.

38. Drehschieber nach einem der Ansprüche 30 bis 37, **dadurch gekennzeichnet, dass** die Dichtlippe (216) aus einem Elastomerwerkstoff besteht.

39. Drehschieber nach einem der vorhergehenden Ansprüche, **dadurch gekennzeichnet, dass** mindestens eines der Querschnittsverstellglieder (303) in einem Grundglied (302) drehbar gelagert ist, wobei das Querschnittsverstellglied (303) zumindest radial beabstandet zu dem Grundglied (302) angeordnet ist.

40. Drehschieber nach Anspruch 39, **dadurch gekennzeichnet, dass** der Abstand (a) derart groß gewählt ist, dass ein im Kühlmittelkreislauf angenommener, vorhandener Festkörper bestimmbarer Größe nicht zwischen dem Querschnittsverstellglied (303) und dem Grundglied (302) verklemmt.

41. Drehschieber nach Anspruch 39 oder 40, **dadurch gekennzeichnet, dass** das Querschnittsverstellglied (303) mindestens einen Wellenabschnitt (311,312), insbesondere zwei Wellenabschnitte (311,312), aufweist, mittels dessen das Querschnittsverstellglied (303) an dem Grundglied (302) drehbar gelagert ist.

42. Drehschieber nach einem der Ansprüche 39 bis 41, **dadurch gekennzeichnet, dass** der Wellenabschnitt (311,312) an einer Stirnseite (308,313) des Querschnittsverstellglieds (303) angeordnet ist.

43. Drehschieber nach einem der Ansprüche 39 bis 42, **dadurch gekennzeichnet, dass** der Wellenabschnitt (311,312) einen kleineren Durchmesser aufweist als das Querschnittsverstellglied (303).

44. Drehschieber nach einem der Ansprüche 39 bis 43, gekennzeichnet durch mindestens eine zwischen Querschnittsverstellglied (303) und Grundglied (302) geschaltete Dichtung (310), insbesondere nach einem oder mehreren der Ansprüche 30 bis 38.

45. Elektromechanische Baugruppe mit einem Drehschieber nach einem oder mehreren der vorhergehenden Ansprüche, gekennzeichnet durch einen den Drehschieber (1,23,101,201,301) antreibenden elektrischen Antrieb.

## Claims

1. Rotary valve, in particular for a coolant circuit of an internal combustion engine having a plurality of branches, comprising a plurality of cross-section adjustment elements (2, 3, 4; 24, 25, 38; 102, 103) and at least one device which couples the cross-section adjustment elements (2, 3, 4; 24, 25, 38; 102, 103) to one another, **characterised in that**, when in the coupled state, the device which couples the cross-section adjustment elements (2, 3, 4; 24, 25, 38; 102, 103) to one another produces a rotational angle difference between the cross-section adjustment elements (2, 3, 4; 24, 25, 38; 102, 103).

2. Rotary valve according to claim 1, **characterised in that** the device is a rotary gear.

3. Rotary valve according to any of the preceding claims, **characterised in that** the cross-section adjustment elements (2, 3, 4; 24, 25, 38) are assigned to different rotary elements (5, 6, 7) which are each operatively interconnected by means of the rotary gear.

4. Rotary valve according to any of the preceding claims, **characterised in that** the rotary gear is designed as a step-down gear (8, 9).

5. Rotary valve according to any of the preceding claims, **characterised in that** the rotary gear is designed as a step-up gear.

6. Rotary valve according to any of the preceding claims, **characterised in that** there are two or three rotary elements (5, 6, 7).

7. Rotary valve according to any of the preceding claims, **characterised in that** the rotary valve (1; 23) is climate control element in a motor vehicle.

8. Rotary valve according to any of the preceding claims, **characterised in that** a cross-section adjustment element (2) of a first rotary element (5) is designed as a thermostat.

9. Rotary valve according to any of the preceding claims, **characterised in that** a cross-section adjustment element (3) of a second rotary element (6) is designed as a controller for a heat exchanger in a heating system.

10. Rotary valve according to any of the preceding claims, **characterised in that** a cross-section adjustment element (4) of a third rotary element (7) is designed as an oil cooling circuit controller.

11. Rotary valve according to any of the preceding claims, **characterised in that** at least two cross-section adjustment elements (2, 3, 4; 24, 25, 38) are interconnected in terms of flow.

12. Rotary valve according to any of the preceding claims, **characterised in that** the first rotary element (5; 24) can be driven by means of a servomotor (10; 40).

13. Rotary valve according to any of the preceding claims, **characterised in that** the rotary gear is designed as a planetary (29), bevel or spur gear.

14. Rotary valve according to any of the preceding claims, **characterised in that** the cross-section adjustment elements (2, 3, 4) are formed integrally with the rotary elements (5, 6, 7).

15. Rotary valve according to any of the preceding claims, **characterised by** at least one driving cross-section adjustment element (102) and at least one cross-section adjustment element (103) which can be driven by the driving cross-section adjustment element (102) by means of the device designed as a gear (113), the gear (113) having at least one gearwheel (114) which interacts with entraining elements (117, 122) of each cross-section adjustment element (102, 103).

16. Rotary valve according to any of the preceding claims, **characterised in that** the entraining elements (122) of the drivable cross-section adjustment element (103) are distributed over the entire circumference of said drivable cross-section adjustment element, and the entraining elements (117) of the driving cross-section adjustment element (102) are only distributed over at least one circumferential angular region of said driving cross-section adjustment element.

17. Rotary valve according to any of the preceding claims, **characterised in that** the entraining elements (117, 18) are arranged on the opposing ends (105, 106) of the cross-section adjustment elements (102, 103).

18. Rotary valve according to any of the preceding claims, **characterised in that** the entraining elements (117, 122) are designed as entraining axial projections (118, 123).

19. Rotary valve according to any of the preceding claims, **characterised in that** the axis of rotation (115) of the gearwheel (114) extends in parallel with the axes of rotation (14) of the cross-section adjustment elements (102, 103).

20. Rotary valve according to any of the preceding claims, **characterised in that** the gear (113) has an anti-rotation means (130).

21. Rotary valve according to any of the preceding claims, **characterised in that** the anti-rotation means (130) is formed by the gearwheel (114) and the driving cross-section adjustment element (102).

22. Rotary valve according to any of the preceding claims, **characterised in that** the driving cross-section adjustment element (102) comprises a ring-segment-shaped locking axial projection (119) in at least one circumferential angular region which is free of entrainment.

23. Rotary valve according to any of the preceding claims, **characterised in that** the entraining axial projections (118) project further in the axial direction than the locking axial projection (119).

24. Rotary valve according to any of the preceding claims, **characterised in that** some of the teeth (124) of the gearwheel (114) are axially shorter on the side (125) of the gearwheel (114) that interacts with the driving cross-section adjustment element (102).

25. Rotary valve according to any of the preceding claims, **characterised in that**, in certain rotational positions, the wider teeth (127) interact with the locking axial projection (119).

26. Rotary valve according to any of the preceding claims, **characterised in that** the narrower teeth (124) are axially spaced from the locking axial projection (119).

27. Rotary valve according to any of the preceding claims, **characterised in that** the gear (113) is arranged outside the flow cross section of the cross-section adjustment elements (102, 103).

28. Rotary valve according to any of the preceding claims, **characterised in that** the gear (113) has a transmission ratio of 1:1.

29. Rotary valve according to any of the preceding claims, **characterised in that** the gear (113) is either a step-up or step-down gear.

30. Rotary valve according to any of the preceding claims, **characterised by** a base element (203) which abuts the cross-section adjustment element (204) by at least one seal (209) being inserted therebetween, the seal (209) having at least one sealing wall (211, 213) and a sealing lip (216) which is arranged so as to be adjacent to said sealing wall, the sealing wall (211, 213) being more rigid than the sealing lip (216).

31. Rotary valve according to claim 30, **characterised in that** the sealing wall (211, 213) consists of a more rigid, or less resilient, material compared with the sealing lip (216).

32. Rotary valve according to either claim 30 or claim 31, **characterised in that** the sealing lip (216) is adjacent to sealing walls (211, 213) on either side.

33. Rotary valve according to any of claims 30 to 32, **characterised in that** the sealing walls (211, 213) are formed by the legs (212, 214) of a U-shaped sealing profile (210), and **in that** the sealing lip (216) is arranged in the inner space of the U-shaped sealing profile (210).

34. Rotary valve according to any of claims 30 to 33, **characterised in that** the sealing wall (211, 213) is formed by one leg (212, 214) of an L-shaped sealing profile, and **in that** the sealing lip (216) is arranged on the other leg (212, 214).

35. Rotary valve according to any of claims 30 to 34, **characterised in that** a spring element (208) is arranged between the sealing profile (210) and the base element (203).

36. Rotary valve according to any of claims 30 to 35, **characterised in that**, when in the force-free state, there is lateral spacing, or lateral spacings, between the sealing wall (211, 213), or sealing walls (211, 213), and the sealing lip (216).

37. Rotary valve according to any of claims 30 to 36, **characterised in that** the sealing wall (211, 213) and/or the sealing walls (211, 213) consists/consist of Teflon.

38. Rotary valve according to any of claims 30 to 37, **characterised in that** the sealing lip (216) consists of an elastomer material.

39. Rotary valve according to any of the preceding claims, **characterised in that** at least one of the cross-section adjustment elements (303) is rotatably mounted in a base element (302), the cross-section adjustment element (303) being at least radially spaced from the base element (302).

40. Rotary valve according to claim 39, **characterised in that** the spacing (a) is selected such that a solid of determinable size that is present and carried in the coolant circuit does not get lodged between the cross-section adjustment element (303) and the base element (302).

41. Rotary valve according to either claim 39 or claim 40, **characterised in that** the cross-section adjustment element (303) comprises at least one shaft portion (311, 312), in particular two shaft portions (311, 312), by means of which the cross-section adjustment element (303) is rotatably mounted on the base element (302).

42. Rotary valve according to any of claims 39 to 41, **characterised in that** the shaft portion (311, 312) is arranged on an end face (308, 313) of the cross-section adjustment element (303).

43. Rotary valve according to any of claims 39 to 42, **characterised in that** the shaft portion (311, 312) has a smaller diameter than the cross-section adjustment element (303).

44. Rotary valve according to any of claims 39 to 43, **characterised by** at least one seal (310), in particular a seal according to one of more of claims 30 to 38, which is inserted between the cross-section adjustment element (303) and the base element (302).

45. Electromechanical assembly comprising a rotary valve according to one or more of the preceding claims, **characterised by** an electric drive which drives the rotary valve (1, 23, 101, 201, 301).

## Revendications

1. Tiroir rotatif, en particulier pour un circuit de refroidissement d'un moteur à combustion interne présentant plusieurs branches, avec plusieurs éléments de réglage de section transversale (2,3,4 ; 24,25,38 ; 102,103) et au moins un dispositif couplant l'un à l'autre les éléments de réglage de section transversale (2,3,4 ; 24,25,38 ; 102,103), **caractérisé en ce que** le dispositif couplant l'un à l'autre les éléments de réglage de section transversale (2,3,4 ; 24,25,38 ; 102,103) produit à l'état couplé une différence d'angle de rotation entre les éléments de réglage de section transversale (2,3,4 ; 24,25,38 ; 102,103).

2. Tiroir rotatif selon la revendication 1, **caractérisé en ce que** le dispositif est un mécanisme rotatif.

3. Tiroir rotatif selon l'une quelconque des revendications précédentes, **caractérisé en ce qu'**aux éléments de réglage de section transversale (2,3,4 ; 24,25,38 ; 102,103), sont affectés différents éléments rotatifs (5,6,7) qui sont activement reliés l'un à l'autre respectivement via le mécanisme rotatif.

4. Tiroir rotatif selon l'une quelconque des revendications précédentes, **caractérisé en ce que** le mécanisme rotatif se présente sous la forme d'un réducteur de vitesse (8,9).

5. Tiroir rotatif selon l'une quelconque des revendications précédentes, **caractérisé en ce que** le mécanisme rotatif se présente sous la forme d'un engrenage multiplicateur.

6. Tiroir rotatif selon l'une quelconque des revendications précédentes, **caractérisé en ce qu'**il y a deux ou trois éléments rotatifs (5,6,7).

7. Tiroir rotatif selon l'une quelconque des revendications précédentes, **caractérisé en ce que** le tiroir rotatif (1 ; 23) est un élément de climatisation d'un véhicule automobile.

8. Tiroir rotatif selon l'une quelconque des revendications précédentes, **caractérisé en ce qu'**un élément de réglage de section transversale (2) d'un premier élément rotatif (5) se présente sous la forme d'un thermostat.

9. Tiroir rotatif selon l'une quelconque des revendications précédentes, **caractérisé en ce qu'**un élément de réglage de section transversale (3) d'un deuxième élément rotatif (6) se présente sous la forme d'un régulateur d'échangeur de chaleur de chauffage.

10. Tiroir rotatif selon l'une quelconque des revendications précédentes, **caractérisé en ce qu'**un élément de réglage de section transversale (4) d'un troisième élément rotatif (7) se présente sous la forme d'un régulateur de circuit de refroidissement d'huile.

11. Tiroir rotatif selon l'une quelconque des revendications précédentes, **caractérisé en ce qu'**au moins deux éléments de réglage de section transversale (2,3,4 ; 24,25,38) sont reliés l'un à l'autre en mode technique d'écoulement.

12. Tiroir rotatif selon l'une quelconque des revendications précédentes, **caractérisé en ce que** le premier élément rotatif (5 ; 24) peut être entraîné au moyen d'un moteur de commande (10 ; 40).

13. Tiroir rotatif selon l'une quelconque des revendications précédentes, **caractérisé en ce que** le mécanisme rotatif se présente sous la forme d'un engrenage planétaire (29), d'un engrenage conique ou d'un engrenage droit.

14. Tiroir rotatif selon l'une quelconque des revendications précédentes, **caractérisé en ce que** les éléments de réglage de section transversale (2,3,4) se présentent d'un seul tenant avec les éléments rotatifs (5,6,7).

15. Tiroir rotatif selon l'une quelconque des revendications précédentes, **caractérisé par** au moins un élément de réglage de section transversale menant (102) et au moins un élément de réglage de section transversale (103) qui peut être mené par l'élément de réglage de section transversale menant (102) via le dispositif conformé en mécanisme (113), dans lequel le mécanisme (113) présente au moins une roue dentée (114) qui coopère avec des éléments entraîneurs (117, 122) de chaque élément de réglage de section transversale (102,103).

16. Tiroir rotatif selon l'une quelconque des revendications précédentes, **caractérisé en ce que** les éléments entraîneurs (122) de l'élément de réglage de section transversale (103) qui peut être mené sont aménagés sur toute la périphérie et les éléments entraîneurs (117) de l'élément de réglage de section transversale menant (102) sont aménagés répartis seulement sur au moins une zone d'angle de la périphérie.

17. Tiroir rotatif selon l'une quelconque des revendications précédentes, **caractérisé en ce que** les éléments entraîneurs (117, 18) sont aménagés aux extrémités opposées (105,106) des éléments de réglage de section transversale (102,103).

18. Tiroir rotatif selon l'une quelconque des revendications précédentes, **caractérisé en ce que** les éléments entraîneurs (117, 122) se présentent sous la forme de saillies axiales entraîneuses (118, 123).

19. Tiroir rotatif selon l'une quelconque des revendications précédentes, **caractérisé en ce que** l'axe de rotation (115) de la roue dentée (114) s'étend parallèlement aux axes de rotation (14) des éléments de réglage de section transversale (102,103).

20. Tiroir rotatif selon l'une quelconque des revendications précédentes, **caractérisé en ce que** le mécanisme (113) présente une sécurité anti-torsion (130).

21. Tiroir rotatif selon l'une quelconque des revendications précédentes, **caractérisé en ce que** la sécurité anti-torsion (130) est formée par la roue dentée (114) et l'élément de réglage de section transversale menant (102).

22. Tiroir rotatif selon l'une quelconque des revendications précédentes, **caractérisé en ce que** l'élément de réglage de section transversale menant (102) présente une saillie axiale de sécurité (119) en forme de segment annulaire dans au moins une zone d'angle de la périphérie sans entraînement.

23. Tiroir rotatif selon l'une quelconque des revendications précédentes, **caractérisé en ce que** les saillies axiales entraîneuses (118) font saillie axialement plus loin que la saillie axiale de sécurité (119).

24. Tiroir rotatif selon l'une quelconque des revendications précédentes, **caractérisé en ce que** certaines des dents (124) de la roue dentée (114) sont raccourcies axialement du côté (125) de la roue dentée (114) coopérant avec l'élément de réglage de section transversale menant (102).

25. Tiroir rotatif selon l'une quelconque des revendications précédentes, **caractérisé en ce que** les dents plus larges (127) coopèrent avec la saillie axiale de sécurité (119) dans certaines positions de rotation.

26. Tiroir rotatif selon l'une quelconque des revendications précédentes, **caractérisé en ce que** les dents plus étroites (124) sont axialement distantes de la saillie axiale de sécurité (119).

27. Tiroir rotatif selon l'une quelconque des revendications précédentes, **caractérisé en ce que** le mécanisme (113) est aménagé à l'extérieur de la section transversale d'écoulement de l'élément de réglage de section transversale (102,103).

28. Tiroir rotatif selon l'une quelconque des revendications précédentes, **caractérisé en ce que** le mécanisme (113) présente un rapport de 1:1.

29. Tiroir rotatif selon l'une quelconque des revendications précédentes, **caractérisé en ce que** le mécanisme (113) est un engrenage de multiplication ou de réduction.

30. Tiroir rotatif selon l'une quelconque des revendications précédentes, **caractérisé en ce qu'**un élément de base (203) s'appliquant sur l'élément de réglage de section transversale (204) par entremise d'au moins un joint étanche (209), dans lequel le joint étanche (209) présente au moins une paroi étanche (211,213) et une lèvre étanche (216) disposée adjacente à celle-ci, la paroi étanche (211,213) étant plus rigide que la lèvre étanche (216).

31. Tiroir rotatif selon la revendication 30, **caractérisé en ce que** la paroi étanche (211,213) est constituée d'un matériau plus rigide, éventuellement moins élastique que la lèvre étanche (216).

32. Tiroir rotatif selon l'une quelconque des revendications 30 ou 31, **caractérisé en ce que** la lèvre étanche (216) est adjacente des deux côtés des parois étanches (211,213).

33. Tiroir rotatif selon l'une quelconque des revendications 30 à 32, **caractérisé en ce que** les parois étanches (211,213) sont formées par les branches (212,214) d'un profilé étanche (210) en forme de U et la lèvre étanche (216) se trouve à l'intérieur du profilé étanche (210) en forme de U.

34. Tiroir rotatif selon l'une quelconque des revendications 30 à 33, **caractérisé en ce que** la paroi étanche (211,213) est formée par une branche (212,214) d'un profilé étanche en forme de U et la lèvre étanche (216) est aménagée sur l'autre branche (212,214).

35. Tiroir rotatif selon l'une quelconque des revendications 30 à 34, **caractérisé en ce qu'**un élément à ressort (203) est disposé entre le profilé étanche (210) et l'élément de base (203).

36. Tiroir rotatif selon l'une quelconque des revendications 30 à 35, **caractérisé en ce que** la lèvre étanche (216) présente à l'état de force nulle une distance latérale, éventuellement des distances latérales par rapport à la paroi étanche (211,213) ou aux parois étanches (211,213).

37. Tiroir rotatif selon l'une quelconque des revendications 30 à 36, **caractérisé en ce que** la paroi étanche (211,213) et/ou les parois étanches (211,213) est ou sont constituées de Teflon.

38. Tiroir rotatif selon l'une quelconque des revendications 30 à 37, **caractérisé en ce que** la lèvre étanche (216) est constituée d'un matériau élastomère.

39. Tiroir rotatif selon l'une quelconque des revendications précédentes, **caractérisé en ce qu'**au moins l'un des éléments de réglage de section transversale (303) est monté à rotation dans un élément de base (302), dans lequel l'élément de réglage de section transversale (303) est aménagé au moins à distance radiale de l'élément de base (302).

40. Tiroir rotatif selon la revendication 39, **caractérisé en ce que** la distance (a) est choisie assez grande pour qu'un corps solide d'une grandeur déterminable présent reçu dans le circuit d'agent réfrigérant ne se coince pas entre l'élément de réglage de section transversale (303) et l'élément de base (302).

41. Tiroir rotatif selon la revendication 39 ou la revendication 40, **caractérisé en ce que** l'élément de réglage de section transversale (303) présente au moins une section d'arbre (311,312), en particulier deux sections d'arbre (311,312) au moyen desquelles l'élément de réglage de section transversale (303) est monté à rotation sur l'élément de base (302).

42. Tiroir rotatif selon l'une quelconque des revendications 39 à 41, **caractérisé en ce que** la section d'arbre (311,312) est aménagée sur une face avant (308,313) de l'élément de réglage de section transversale (303).

43. Tiroir rotatif selon l'une quelconque des revendications 39 à 42, **caractérisé en ce que** la section d'arbre (311,312) présente un diamètre plus petit que l'élément de réglage de section transversale (303).

44. Tiroir rotatif selon l'une quelconque des revendications 39 à 43, **caractérisé par** au moins un joint étanche (310) disposé entre l'élément de réglage de section transversale (303) et l'élément de base (302), en particulier selon une ou plusieurs des revendications 30 à 38.

45. Sous-groupe électromécanique équipé d'un tiroir rotatif selon une ou plusieurs des revendications précédentes, **caractérisé par** un entraînement électrique entraînant le tiroir rotatif (1,23,101,201,301).
